(19) Europäisches Patentamt
European Patent Office
Office européen des brevets

(11) EP 1 590 297 B2

(12) # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**21.09.2016 Patentblatt 2016/38**

(45) Hinweis auf die Patenterteilung:
**11.08.2010 Patentblatt 2010/32**

(21) Anmeldenummer: **04700700.0**

(22) Anmeldetag: **08.01.2004**

(51) Int Cl.:
***C01B 33/193*** *(2006.01)*

(86) Internationale Anmeldenummer:
**PCT/EP2004/050004**

(87) Internationale Veröffentlichungsnummer:
**WO 2004/065443 (05.08.2004 Gazette 2004/32)**

(54) **SPEZIELL GEFÜLLTE KIESELSÄUREN FÜR GUMMIANWENDUNGEN**

SPECIALLY PRECIPITATED SILICIC ACIDS FOR RUBBER APPLICATIONS

SILICES PRECIPITEES DE FA ON SPECIFIQUE POUR DES APPLICATIONS DANS LE DOMAINE DU CAOUTCHOUC

(84) Benannte Vertragsstaaten:
**AT BE BG CH CY CZ DE DK EE ES FI FR GB GR HU IE IT LI LU MC NL PT RO SE SI SK TR**

(30) Priorität: **22.01.2003 DE 10302301**
**13.12.2003 DE 10358466**

(43) Veröffentlichungstag der Anmeldung:
**02.11.2005 Patentblatt 2005/44**

(73) Patentinhaber: **Evonik Degussa GmbH**
**45128 Essen (DE)**

(72) Erfinder:
- **LUGINSLAND, Detlef**
  **Hoboken, NJ 07030 (US)**
- **WEHMEIER, André**
  **50354 Hürth (DE)**
- **STENZEL, Oleg**
  **50999 Köln (DE)**
- **UHRLANDT, Stefan**
  **Belle Mead, NJ 08502 (US)**

(56) Entgegenhaltungen:
**EP-A- 0 407 262**
**EP-A- 0 647 591**
**EP-A- 0 745 558**
**EP-A- 0 755 899**
**EP-A- 0 901 986**
**EP-A- 0 983 966**
**WO-A-96/35639**
**WO-A1-99/29623**
**WO-A1-2004/065299**
**DE-A1- 10 124 298**
**US-A- 5 342 598**
**US-A- 5 929 156**
**US-A- 5 958 127**
**US-A1- 2003 003 040**
**US-B1- 6 468 493**

EP 1 590 297 B2

## Beschreibung

Die vorliegende Erfindung betrifft Fällungskieselsäuren, die eine äußerst geringe Mikroporosität und hohe Gummiaktivität aufweisen, ein Verfahren zu deren Herstellung und deren Verwendung als Füllstoff für Gummimischungen.

Der Einsatz von Fällungskieselsäuren in Elastomermischungen wie zum Beispiel Reifenlaufflächenmischungen ist lange bekannt (EP 0 501 227). Für die Verwendung von Kieselsäuren als verstärkenden Füllstoff in Kautschukmischungen, wie sie u. a. zur Herstellung von luftgefüllten Reifen und technischen Gummiartikeln Verwendung finden, werden hohe Anforderungen gestellt. Sie sollen leicht und gut im Kautschuk einarbeitbar und dispergierbar sein und in Verbindung mit einem Kopplungsreagenz, vorzugsweise einer bifunktionellen Organosiliziumverbindung, eine chemische Verbindung mit dem Kautschuk eingehen, die zu der angestrebten hohen Verstärkung der Gummimischung führt. Die Verstärkungseigenschaft kann insbesondere an hohen statischen Spannungswerten und einem niedrigen Abriebswert festgemacht werden. Für die Verstärkungseigenschaft der Kieselsäuren ist insbesondere die Teilchengröße, Oberflächenmorphologie, Oberflächenaktivität sowie das Anbindungsvermögen des Kopplungsreagenzes von entscheidender Bedeutung.

In Gummianwendungen finden üblicherweise Fällungskieselsäuren mit Primärteilchendurchmessern von 10 bis 50 nm Anwendung. Der Primärteilchendurchmesser kann z. B. mittels der Bildauswertung der Transmissions-Elektronenspektroskopie (TEM) bestimmt werden (R. H. Lange, J. Bloedom: "Das Elektronenmikroskop, TEM + REM" Thieme Verlag, Stuttgart, New York (1981)). Die Oberflächen gemessen durch die Adsorption des kleinen Stickstoffmoleküls $N_2$, im nachfolgenden als BET-Oberfläche bezeichnet (vgl. S. Brunauer, P. H. Emmett, E. Teller, "Adsorption of Gases in Multimolecular Layers", J. Am. Chem. Soc. 60, 309 (1938)), liegen typischerweise im Bereich von 50 bis 200 $m^2/g$, bevorzugt 110 bis 180 $m^2/g$. Die für den Kautschuk zugängige Oberfläche wird mittels der Adsorption des größeren N-Cetyl-N,N,N-trimethylammoniumbromidmoleküls, im nachfolgenden als CTAB-Oberfläche bezeichnet (vgl. Janzen, Kraus, Rubber Chem. Technol. 44, 1287 (1971)), bestimmt. Zur exakten Durchführung der Messungen werden im weiteren Textverlauf detaillierte Angaben gemacht. Die Differenz aus BET- und CTAB-Oberfläche lässt sich folglich als Mikroporosität bezeichnen und gibt die Kieselsäureoberfläche wieder, die nicht für den Kautschuk zugängig ist und somit nicht verstärkend wirken kann. Üblicherweise ist das BET/CTAB-Verhältnis handelsüblicher aktiver Kieselsäuren > 1.05, was einen entsprechend hohen Grad an Mikroporosität anzeigt.

Zudem ist dem Fachmann bekannt, dass niedermolekularen Verbindungen, wie z. B. die bifunktionellen Organosiliziumverbindungen und Vulkanisationsbeschleuniger, in den Poren der mikroporösen Kieselsäure physi- und chemisorbieren können und damit für Ihre Funktion als Kautschukhaftvermittler bzw. Vulkanisationsbeschleuniger zur Kautschukvernetzung nicht mehr ausüben können.

Ferner ist dem Fachmann bekannt, dass das Kopplungsreagenz, üblicherweise eine bifunktionelle Organosiliziumverbindung bekannt aus (S. Wolff, "Chemical Aspects of Rubber Reinforcement by Fillers", Rubber Chem. Technol. 69, 325 (1996)), die kautschukwirksame Oberfläche möglichst homogen und quantitativ modifizieren soll. Die Modifizierung kann durch eine Vorbelegung der Kieselsäure in Substanz oder Lösung/Suspension (ex-situ) (U. Görl, R. Panenka, "Silanisierte Kieselsäuren - Eine neue Produktklasse für zeitgemäße Mischungsentwicklung", Kautsch. Gummi Kunstst. 46, 538 (1993)) sowie während des Mischprozesses (in-situ) (H.-D. Luginsland, "Processing of Silica/Silane-Filled Tread Compounds", paper No. 34 presented at the ACS Meeting, April 4-6, 2000, Dallas, Texas/USA) erfolgen, wobei die in-situ Modifizierung das zu bevorzugende und auch üblicherweise angewandte Verfahren darstellt. Um eine schnelle und quantitative Silanisierung der kautschukwirksamen Oberfläche zu gewährleisten, ist es daher notwendig die Oberfläche gezielt mit reaktiven Silanolgruppen, an denen die Anbindung der Organosiliziumverbindung erfolgen kann, anzureichern. Die Interaggregatstrukturvon Kieselsäuren wird üblicherweise mittels der DBP-Messung bestimmt (J. Behr, G. Schramm, "Über die Bestimmung der Ölzahl von Kautschukfüllstoffen mit dem Brabender-Plastographen", Gummi Asbest Kunstst. 19, 912 (1966)). Eine hohe DBP-Zahl ist notwendig um eine optimale Dispersion des Füllstoffs im Kautschuk zu gewährleisten. Eine Feuchte > 4 % ist notwendig um eine schnelle und vollständige Silanisierung der Kieselsäureoberfläche mit einer Organosiliziumverbindung zu gewährleisten (U. Görl, A. Hunsche, A. Müller, H. G. Koban, "Investigations into the Silica/Silane Reaction System", Rubber Chem. Technol. 70, 608 (1997)).

Aus JP 2002179844 sind Gummimischungen mit Kieselsäuren bekannt, bei denen die Differenz zwischen BET- und CTAB-Oberfläche der Kieselsäuren kleiner 1 $m^2/g$ ist. Die hohe Searszahl $V_2$ als Maß der Silanolgruppenanzahl, die für eine hohe Aktivität gegenüber der bifunktionellen Organosiliziumverbindung notwendig ist, und die hohe DBP-Zahl, die für eine sehr gute Dispersion im Gummi notwendig ist, werden nicht genannt. Beide Größen sind aber neben der geringen Mikroporosität maßgeblich für ein hohes Verstärkungsmaß der Gummimischung und folglich guten Straßenabrieb.

Hinsichtlich der Herstellung von Kieselsäuren sind dem Fachmann verschiedene Verfahren bekannt. So wurden Fällungen bei konstantem pH-Wert in der EP 0 937 755 beschrieben. Kieselsäuren, die bei konstantem Kationenüberschuss gefällt wurden, wurden in der DE 101 24 298 offenbart. In der DE 101 12 441 A1, der EP 0 755 899 A2 und der US 4 001 379 wurden Fällungen bei konstanter Alkalizahl (AZ-Zahl) beschrieben.

Kieselsäuren für Gummianwendungen werden in der Regel nach einem Verfahren hergestellt, bei dem die Fällung bei Temperaturen zwischen 60 bis 95 °C und einem konstanten pH-Wert zwischen 7 und 10 erfolgt, siehe z. B. EP 0 901 986 A1.

Aus dem Dokument EP 0983 966 sind Fällungshieselsäuren bekannt, die mit Organosilanen modifiziert sind und in Reifen eingesetzt werden können

Ziel der vorliegenden Erfindung ist es, neue, leicht dispergierbare Fällungskieselsäuren zur Verfügung zu stellen, welche in Elastomermischungen eingearbeitet werden können und deren Eigenschaften verbessern. Des Weiteren soll ein Verfahren zur Herstellung der entsprechenden Kieselsäuren bereitgestellt werden.

Gegenstand der vorliegenden Erfindung, sind daher leicht dispergierbare Fällungskieselsäuren charakterisiert durch:

| | |
|---|---|
| CTAB-Oberfläche | 100-200 $m^2/g$ mit den Vorzugsbereichen von 100-160 $m^2/g$,100-130 $m^2/g$ und 110-125 $m^2/g$, |
| BET/CTAB-Verhältnis | 0.8 - 1.05, Vorzugsbereiche 0.90 - 1.03, 0.93 - 1.03 und besonders bevorzugt 0.96 - 1.03, |
| DBP-Zahl | 210 - 280 g/(100 g), Vorzugsbereich 250 - 280 g/(100 g), |
| Searszahl $V_2$ | 10 - 30 ml/(5 g), mit den Vorzugsbereichen 20 - 30 ml/(5g) und 21 bis 28 (ml/5 g), |
| Feuchte | 4- 8 %, und einem Verhaltnis Searszahl $V_2$ zur BET-oberfläche von 0.150 bis 0.370 ml/(5$m^2$) |

Ferner können die erfindungsgemäßen Fällungskieselsäuren bevorzugt einen oder mehrere der folgenden physikalisch-chemischen Parameter aufweisen:

| | |
|---|---|
| BET-Oberfläche | 80 - 210 $m^2/g$, wobei die Fällungskieselsäuren in einer ersten Ausfführungsform eine BET von 80 -110 $m^2/g$ und in einer zweiten Aus- führungsform 110 -150 $m^2/g$, Bevorzugt 110 - 129 $m^2/g$ aufweisen, |
| Verhältnis Searszahl $V_2$ zu BET-Oberfläche | mit den Vorzugs- bereichen 0.150 - 0.320 ml/(5 $m^2$). 0.170 - 0.320 ml/ (5 $m^2$), 0.180 - 0.300 ml/(5 $m^2$) besonders bevorzugt 0.190 - 0.280 ml/ (5$m^2$) und 0.190-0240 ml/(5 $m^2$), |
| Primärteilchendurchmesser | 10-50 nm. |

In einer bevorzugten Ausführungsform weisen die erfindungsgemäßen Fällungskieselsäuren eine Searszahl $V_2$ von 22 - 25 ml/(5 g) und in einer weiteren 25 - 28 ml/(5 g).

Die erfindungsgemäßen Fällungskieseläuren weisen neben einer hohen absoluten Zahl an Silanolgruppen (Searszahl $V_2$), ein im Vergleich zu Fälhungskieselsäuren des Standes der Technik stark erhöhtes Verhältnis der Searszahl $V_2$ zur BET-Oberfläche auf. D. h. die erfindungsgemäßen Fällungskieselsäuren weisen insbesondere im Bezug auf die Gesamtoberfläche eine sehr hohe Zahl an Silanolgruppen auf.

Neben der erhöhten Zahl an Silanolgruppen zeichnensich die erfindungsgemäßen Fällungskieselsäuren durch eine geringe Mikroporosität, d. h. ein sehr niedriges BET zu CTAB-Verhältnis aus.

Die Kombination der genannten Merkmale, insbesondere das hohe Searszahl $V_2$/BET-Verhältnis führen dazu, dass sich die erfindungsgemäßen Fällungskieselsäuren hervorragend als Verstärkerfüllstoff für Elastomere eignen. Die erfindungsgemäßen Fällungskieselsäure zeichnen sich dabei durch eine erhöhte Kautschukaktivität aus, zeigen ein sehr gutes Dispersionsverhalten und eine niedrigere Vulkanisationszeit.

Ein weiterer Gegenstand dervorliegenden Erfindung ist ein Verfahren, welches zur Herstellung der erfindungsgemäßen Fällungskieselsäuren mit einer

| | |
|---|---|
| CrAB-Oberfläche | 100 - 200 $m^2/g$ mit den Vorzugsbereichen von 100 -160 $m^2/g$, 100-130 $m^2/g$ und 110 -125 $m^2/g$, |
| BET/CTAB-Verhältnis | 0.8 - 1.05, Vorzugsbereiche 0.90 -1.03, 0.93 - 1.03 und besonders bevorzugt 0.96 -1.03, |
| DBP-Zahl | 210 - 280 g/(100 g), Vorzugsbereich 250 - 280 g/(100 g), |
| Searszahl $V_2$ | 10 - 30 ml/(5 g), mit den Vorzugsbereichen 20 - 30 ml/(5 g) und 21 bis 28 (ml/5g), |
| Feuchte | 4 - 8 % und verhältnis Searszahl $V_2$ zu BET-Oberfläche von 0.150 bis 0.370ml/(5$m^2$) |

sowie gegebenenfalls einen oder mehreren der folgenden physikalisch-chemischen Parameter

| | |
|---|---|
| BET-Oberfläche | 80 - 210 $m^2$/g, wobei die Fällungskieselsäuren in einer ersten Ausführungsform eine BET von 80 -110 $m^2$/g und in einer zweiten Aus- führungsform 110 -150 $m^2$/g, bevorzugt 110 - 129 $m^2$/g aufweisen, |
| Verhältnis Searszahl $V_2$ zu BET-Oberfläche | mit den Vorzugs- bereichen 0.150 - 0320 ml/(5 $m^2$), 0.170 - 0.320 ml/(5 $m^2$), 0.180 - 0.300 ml/(5 $m^2$) besonders bevorzugt 0.190 - 0.280 ml/(5 $m^2$) und 0.190 - 0.240 ml/(5g, |
| Primärteilchendurchmesser | 10 - 50 nm, |

eingesetzt wird und das dadurch gekennzeichnet ist, dass zunächst

a) eine wässrige Lösung eines Alkali- oder Erdalkalisilikats und/oder einer organischen und/oder anorganischen Base mit einem pH-Wert 7.0 bis 14 vorgelegt und
b) in diese Vorlage unter Rühren bei 55 bis 95 °C für 10 bis 120, bevorzugt 10 bis 60 Minuten gleichzeitig Wasserglas und ein Säuerungsmittel dosiert,
g) die erhaltene Suspension 1 bis 120 Minuten, bevorzugt 10 bis 60 Minuten, bei hohen Temperaturen von 80 bis 98 °C nachgerührt wird,
h) mit einem Säuerungsmittell auf einen pH-Wert von ca. 2.5 bis 5 angesäuert und
i) filtriert und, getrocknet wird.

Die Vorlage kann ca. 20, 30, 40, 50, 60, 70, 80 oder 90 % des Endvolumens der Fällung betragen. Die zur Vorlage gegebenen basischen Verbindungen sind insbesondere ausgewählt aus der Gruppe der Alkalihydroxide, Erdalkalihydroxide, Alkalicarbonate, Alkalihydrogencarbonate und Alkalisilikate. Bevorzugt werden Wasserglas und/oder Natronlauge verwendet. Der pH-Wert der Vorlage liegt zwischen 7 und 14, bevorzugt zwischen 10 und 11.

Die Zugabe des Wasserglases und des Säuerungsmittels während Schritt b) kann derart erfolgen, dass der pH-Wert der Reaktionslösung konstant gehalten wird oder variabel bleibt. Es ist aber auch möglich, dass die Fällung bei konstanter Alkalizahl erfolgt. Erfolgt die Fällung bei konstantem pH-Wert, so liegt dieser bevorzugt im Bereich von 7 bis 11. Fällungen bei konstanter Alkalizahl erfolgen bevorzugt bei einer Alkalizahl von 15 bis 40.

Nach Schritt b) kann das erfindungsgemäße Verfahren einen bis zwei Haltepunkte der Art

c) Stoppen der Zudosierung für 30 - 90 Minuten unter Einhaltung der Temperatur und
d) anschließend gegebenenfalls gleichzeitiges Zudosieren von Wasserglas und einem Säuerungsmittel bei gleicher Temperatur unter Rühren für 20 bis 120, bevorzugt 20 bis 80 Minuten

aufweisen.

In Anschluss an Schritt b) bzw. d) wird im erfindungsgemäßen Verfahren die Wasserglaszugabe gestoppt und falls der gewünschte pH-Wert noch nicht erreicht ist, in Schritt

e) eine Säuerungsmitteldosierung mit gleicher oderveränderter Geschwindigkeit, solange weiter zu geführt, bis ein pH-Wert von 5 bis 11, bevorzugt 7 bis 10 erreicht ist.

Um die Konzentration des zur Reaktion zur Verfügung stehenden Wasserglases zu variieren, kann gegebenenfalls

f) der pH-Wert durch Zugabe von weiteren Säuerungsmittels auf 3 bis 11 eingestellt werden und/oder durch Zudosierung einer oder mehreren basischen Verbindungen aus der Gruppe der Alkalihydroxide, Erdalkalihydroxide, Alkalicarbonate, Alkalihydrogencarbonate und Alkalisilikate wieder auf Werte von 8 bis 14, bevorzugt 9-10 und besonders 7-11 angehoben werden. Bevorzugt wird Wasserglas und/oder Natronlauge verwendet.

Die Zudosierung des Säuerungsmittels in Schritt e) bzw. der basischen Verbindung in Schritt f) kann bei 40 bis 98 °C erfolgen. Bevorzugt erfolgt die Zudosierung bei 55 bis 95 °C und besonders bevorzugt bei der Temperatur, die auch für die Schritte b) oder d) gewählt wurde.

Optional kann zwischen den Schritten d) und e) ein weiterer Haltepunkt eingebaut werden.

Ferner kann optional eine zusätzliche Zugabe von organischen oder anorganischen Salzen während einem oder mehreren der Schritte a) bis h) erfolgen. Dies kann in Lösung oder als Feststoff, jeweils kontinuierlich über die Zugabezeit des Wasserglases und des Säuerungsmittels oder als Batchzugabe durchgeführt werden. Es ist auch möglich, die Salze in einer oder beiden Komponenten zu lösen und dann gleichzeitig mit diesen zuzugeben.

Als anorganische Salze werden bevorzugt Alkali- oder Erdalkalisalze verwendet. Insbesondere können alle

Kombinationen der folgenden Ionen eingesetzt werden:

$Li^+$, $Na^+$, $K^+$, $Rb^+$, $Be^{2+}$, $Mg^{2+}$ $Ca^{2+}$, $Sr^{2+}$, $Ba^{2+}$, $H^+$, $F^-$, $Cl^-$, $Br^-$, $I^-$, $SO_3^{2-}$, $SO_4^{2-}$, $HSO_4^-$, $PO_3^{3-}$, $PO_4^{3-}$, $NO_3^-$, $NO_2^-$, $CO_3^{2-}$, $HCO_3^-$, $OH^-$, $TiO_3^{2-}$, $ZrO_3^{2-}$, $ZrO_4^{4-}$, $AlO_2^-$, $Al_2O_4^{2-}$, $BO_4^{3-}$.

Als organische Salze sind die Salze der Ameisen-, Essig- und Propionsäure geeignet. Als Kation seien die genannten Alkali- oder Erdalkaliionen genannt. Die Konzentration dieser Salze in der Zugabelösung kann 0.01 bis 5 mol/l betragen. Bevorzugt wird als anorganisches Salz $Na_2SO_4$ verwendet.

Es ist möglich, das Säuerungsmittel in den Schritten b) und d) in gleicher oder unterschiedlicher Weise zuzuführen, d. h. mit gleicher oder unterschiedlicher Konzentration und/oder Zulaufgeschwindigkeit.

Analog kann auch das Wasserglas in den Schritten b) und d) in gleicher oder unterschiedlicher Weise der Reaktion zugeführt werden.

In einer besonderen Ausführungsform werden in den Schritten b) und d) die Komponenten Säuerungsmittel und Wasserglas so zugeführt, dass die Zulaufgeschwindigkeit in Schritt d) 125 bis 140 % der Zulaufgeschwindigkeit in Schritt b) beträgt, wobei die Komponenten in beiden Schritten jeweils in äquimolarer Konzentration eingesetzt werden. Bevorzugt werden die Komponenten mit gleicher Konzentration und Zulaufgeschwindigkeit zugesetzt.

Neben Wasserglas (Natriumsilikat-Lösung) können auch andere Silikate wie Kalium- oder Calciumsilikat verwendet werden. Als Säuerungsmittel können neben Schwefelsäure auch andere Säuerungsmittel wie HCl, $HNO_3$, $H_3PO_4$ oder $CO_2$ eingesetzt werden.

Die Filtration und Lang- oder Kurzzeittrocknung der erfindungsgemäßen Kieselsäuren sind dem Fachmann geläufig und können z. B. in den genannten Dokumenten nachgelesen werden.

Bevorzugt wird die fällungsgemäße Kieselsäure in einem Stromtrockner, Sprühtrockner, Etagentrockner, Bandtrockner, Drehrohrtrockner, Flash-Trockner, Spin-Flash-Trockner oder Düsenturm getrocknet. Diese Trocknungsvarianten schließen den Betrieb mit einem Atomizer, einer Ein- oder Zweistoffdüse oder einem integrierten Fließbett ein. Nach der Trocknung kann gegebenenfalls eine Vermahlung und/oder Granulation mit einem Walzenkompaktor durchgeführt werden. Bevorzugt weist die erfindungsgemäße Fällungskieselsäure nach dem Trockungsschritt oder der Vermahlung oder der Granulation eine Partikelform mit einem mittleren Durchmesser von über 15 $\mu$m, insbesondere über 80 $\mu$m, besonders bevorzugt über 200 $\mu$m auf (Bestimmung gemäß ISO 2591-1, Dezember 1988). Besonders bevorzugt liegen die erfindungsgemäßen Fällungskieselsäuren im Form eines Pulvers mit einem mittleren Durchmesser über 15 $\mu$m oder in Form von im wesentlichen runden Partikeln mit einem mittleren Durchmesser über 80 $\mu$m (Micro Bead) oder in Form von Granulaten mit einem mittleren Durchmesser $\geq$ 1 mm vor.

Ein weitere Gegenstand der vorliegenden Erfindung ist die Verwendung der erfindungsgemäßen Fällungskieselsäuren, mit einer

| | |
|---|---|
| CTAB-Oberfläche | 100-200 $m^2/g$ mit den Vorzugsbereichen von 100 -160 $m^2/g$, 100-130 $m^2/g$ und 110-125 $m^2/g$, |
| BBT/CTAB-Verhältnis | 0.8 - 1.05, Vorzugsbereiche 0.90 -1.03, 0.93 - 1.03 und besonders bevorzugt 0.96-1.03 |
| DBP-Zahl | 210 - 280 g/(100 g), Vorzugsbereich 250 - 280 g/(100 g), |
| Searszahl $V_2$ | 10-30 ml/(5 g), mit den Vorzugsbereichen 20 - 30 ml/(5g) und 21 bis 28 (ml/5.g), |
| Feuchte | 4-8% und einem Verhältnis Searszahl $V_2$ zuBET-Oberfläche von 0.150 bis 0.370 ml/(5$m^2$) |

sowie gegebenenfalls einem oder mehreren der folgenden physikalisch-chemischen Parameter

| | |
|---|---|
| BET-Oberfläche | 80-210 $m^2/g$, wobei die Fällungskieselsäuren in einer ersten Ausführungsform eine BET von 80-110 $m^2/g$ und in einer zweiten Aus- führungsform 110-150 $m^2g$, bevorzugt 110-129 $m^2/g$ aufweisen, |
| Verhältnis Searszahl $V_2$ zu BET-Oberfläche | mit den Verzugs- bereichen 0.150 - 0.320 ml/(5 $m^2$), 0.170 - 0.320 ml/ (5 $m^2$), 0.180-0.300 ml/(5 $m^2$) besonders bevorzugt 0.190 - 0.280 ml/ (5$m^2$) und 0.190 - 0.240 ml/(5g), |
| Primärteilchendurchmesser | 10 - 50 nm |

zur Herstellung von Elastomermischungen, vulkanisierbaren Kautschukmischungen und/oder sonstigen Vulkanisaten.

Ein weiterer Gegenstand der Erfindung sind daher Elastomermischungen, vulkanisierbare Kautschukmischungen und/oder sonstige Vulkanisate, die die erfindungsgemäße Kieselsäure enthalten, wie beispielsweise Formkörper wie Luftreifen, Reifelaufflächen, Kabelmäntel, Schläuche, Treibriemen, Förderbänder, Wahzenbeläge, Reifen, Schuhsohlen, Dichtungsringe und Dämpfungselemente.

Weiterhin können die erfindungsgemäßen Kieselsäuren in allen Anwendungsgebieten verwendet werden, in denen üblicherweise Kieselsäuren eingesetzt werden, wie z. B. in Batterieseparatoren, als Anti-Blocking-Mittel, als Mattierungsmittel in Farben und Lacken, als Träger von Agrarprodukten und Nahrungsmitteln, in Beschichtungen, in Druckfarben, in Feuerlöschpulvern, in Kunststoffen, im Bereich Non impactprinting, in Papiermasse, im Bereich Personal care und Spezialanwendungen. Unter Verwendung im Bereich non impact printing z. B. im Inkjet-Verfahren ist die Verwendung der erfindungsgemäßen Kieselsäuren in

- Druckfarben zur Verdickung oder zum Verhindern von Spritzen und Abliegen,
- Papier als Füllstoff, Streichpigment, Lichtpauspapier, Thermopapier, Thermosublimation zur Verhinderung des Durchschlagens von Druckfarben, Verbesserung der Bildgrundruhe und Kontrast, Verbesserung der Punktschärfe und der Farbbrillianz zu verstehen.

Unter Verwendung im Bereich personal care ist die Verwendung der erfindungsgemäßen Kieselsäuren als Füllstoff oder Verdickungsmittel z. B. im Bereich der Pharmazie oder Körperpflege zu verstehen.

Optional kann die erfindungsgemäße Kieselsäure mit Silanen oder Organosilanen der Formeln 1 bis III modifiziert werden

$[SiR^1_n(OR)_r(Alk)_m(Ar)_p]_q[B]$ (I),

$SiR^1_n(OR)_{3-n}(Alkyl)$ (II),

oder

$SiR^1_n(OR)_{3-n}(Alkenyl)$ (III),

in denen bedeuten

B: $-SCN$, $-SH$, $-Cl$, $-NH_2$, $-OC(O)CHCH_2$, $-OC(O)C(CH_3)CH$, (wenn q = 1) oder $-S_{w-}$ (wenn q = 2), wobei B chemisch an Alk gebunden ist,

R und $R^1$: aliphatischer, olefinischer, aromatischer oder arylaromatischer Rest mit 2 - 30 C- Atomen, der optional mit den folgenden Gruppen substituiert sein kann: Hydroxy-, Amino-, Alkoholat-, Cyanid-, Thiocyanid-, Halogen-, Sulfonsäure-, Sulfonsäureester-, Thiol-, Benzoesäure-, Benzoesäureester-, Carbonsäure-, Carbonsäureester-, Acrylat-, Metacrylat-, Organosilanrest, wobei R und $R^1$ eine gleiche oder verschiedene Bedeutung oder Substituierung haben können.

n: 0, 1 oder 2,

Alk: einen zweiwertigen unverzweigten oderverzweigten Kohlenwasserstoffrest mit 1 bis 6 Kohlenstoffatomen,

m: 0 oder 1,

Ar: einen Arylrest mit 6 bis 12 C-Atomen, bevorzugt 6 C-Atomen, der mit den folgenden Gruppen substituiert sein kann: Hydroxy-, Amino-, Alkoholat-, Cyanid-, Thiocyanid-, Halogen-, Sulfonsäure-, Sulfonsäureester-, Thiol-, Benzoesäure-, Benzoesäureester-, Carbonsäure-, Carbonsäureester-, Organosilanrest.

p: 0 oder 1, mit der Maßgabe, dass p und n nicht gleichzeitig 0 bedeuten,

q: 1 oder 2,

w: eine Zahl von 2 bis 8,

r: 1, 2 oder 3, mit der Maßgabe, dass r + n + m + p = 4,

Alkyl: einen einwertigen unverzweigten oder verzweigten gesättigten Kohlenwasserstoffrest mit 1 bis 20 Kohlenstoffatomen, bevorzugt 2 bis 8 Kohlenstoffatomen,

Alkenyl: einen einwertigen unverzweigten oder verzweigten ungesättigten Kohlenwasserstoffrest mit 2 bis 20 Kohlenstoffatomen, bevorzugt 2 bis 8 Kohlenstoffatomen.

Auch kann die erfindungsgemäße Kieselsäure mit Siliciumorganischen Verbindungen der Zusammensetzung $SiR^2_{4-n}X_n$ (mit n = 1, 2, 3, 4), $[SiR^2_xX_yO]_z$, (mit $0 \le x \le 2$; $0 \le y \le 2$; $3 \le z \le 10$, mit x + y = 2), $[SiR^2_xX_yN]_z$, (mit $0 \le x \le 2$; $0 \le y \le 2$; $3 \le z \le 10$, mit x + y = 2), $SiR^2_nX_mOSiR^2_oX_p$ (mit $0 \le n \le 3$; $0 \le m \le 3$; $0 \le o \le 3$; $0 \le p \le 3$, mit n + m = 3, o + p = 3), $SiR^2_nX_mNSiR^2_oXp$ (mit $0 \le n \le 3$; $0 \le m \le 3$; $0 \le o \le 3$; $0 \le p \le 3$, mit n + m = 3, o + p = 3), $SiR^2_nX_m[SiR^2_xX_yO]_zSiR^2_oX_p$ (mit $0 \le n \le 3$; $0 \le m \le 3$; $0 \le x \le 2$; $0 \le y \le 2$; $0 \le o \le 3$; $0 \le p \le 3$; $1 \le z \le 10000$, mit n + m = 3, x + y =2, o + p = 3) modifiziert werden. Bei diesen Verbindungen kann es sich um lineare, cyclische und verzweigte Silan-, Silazan- und Siloxanverbindungen handeln. Bei $R^2$ kann es sich um substituierte und/oder unsubstituierte Alkyl- und/oder Arylreste mit 1 - 20 Kohlenstoffatomen handeln, welche mit funktionellen Gruppen wie der Hydroxygruppe, der Aminogruppe, Polyethern wie Ethylenoxid und/oder Propylenoxid und Halogenidgruppen wie Fluorid substituiert sein können. $R^2$ kann

auch Gruppen wie Alkoxy-, Alkenyl-, Alkinyl- und Aryl-Gruppen und schwefelhaltige Gruppen enthalten. Bei X kann es sich um reaktive Gruppen wie Silanol-, Amino-, Thiol-, Halogen-, Alkoxy- Alkenylgruppen und Wasserstoff-Rest handeln.

Bevorzugt werden lineare Polysiloxane der Zusammensetzung $SiR^2_nX_m[SiR^2_xX_yO]_zSiR^2_oX_p$ (mit $0 \leq n \leq 3; 0 \leq m \leq 3; 0 \leq x \leq 2; 0 \leq y \leq 2; 0 \leq o \leq 3; 0 \leq p \leq 3; 1 \leq z \leq 10000$, mit $n+m=3; x + y = 2; o + p = 3$) verwendet, bei welchen $R^2$ bevorzugt durch Methyl repräsentiert wird.

Besonders bevorzugt werden Polysiloxane der Zusammensetzung $SiR^2_nX_m[SiR^2_xX_yO]_zSiR^2_oX_p$ (mit $0 \leq n \leq 3; 0 \leq m \leq 1; 0 \leq x \leq 2; 0 \leq y \leq 2; 0 \leq 0 \leq 3; 0 \leq p \leq 1; 1 \leq z \leq 1000$, mit $n+m = 3$, $x + y = 2$, $o + p = 3$) verwendet, bei welchen $R^2$ bevorzugt durch Methyl repräsentiert wird.

Die Modifizierung der optional granulierten, ungranulierten, vermahlenen und/oder unvermahlenen Fällungskieselsäure mit einem oder mehreren der genannten Organosilanen kann in Mischungen von 0.5 bis 50 Teilen, bezogen auf 100 Teile Fällungskieselsäure, insbesondere 1 bis 15 Teile, bezogen auf 100 Teile Fällungskieselsäure erfolgen, wobei die Reaktion zwischen Fällungskieselsäure und Organosilan während der Mischungsherstellung (in situ) oder außerhalb durch Aufsprühen und anschließendes Tempern der Mischung, durch Mischen des Organosilans und der Kieselsäuresuspension mit anschließender Trocknung und Temperung (zum Beispiel gemäß DE 3437473 und DE 19609619) oder gemäß des Verfahrens beschrieben in DE 19609619 oder DE-PS 4004781 durchgeführt werden kann.

Als Organosiliziumverbindungen eignen sich grundsätzlich alle bifunktionellen Silane, die einerseits eine Kopplung zu dem silanolgruppenhaltigen Füllstoff und andererseits eine Kopplung zum Polymer bewerkstelligen können. Übliche verwendete Mengen der Organosiliziumverbindungen sind 1 bis 10 Gew.-% bezogen, auf die Gesamtmenge an Fällungskieselsäure.

Beispiele für diese Organosiliziumverbindungen sind:

Bis(3-triethoxysilylpropyl)tetrasulfan, Bis(3-triethoxysilylpropyl)disulfan, Vinyltrimethoxysilan, Vinyltriethoxysilan, 3-Mercaptopropyltrimethoxysilan, 3-Mercaptopropyltriethoxysilan, 3-Aminopropyltrimethoxysilan, 3-Aminopropyltriethoxysilan. Weitere Organosiliziumverbindungen sind in WO 99/09036, EP 1108231, DE 10137809, DE 10163945, DE 10223658 beschrieben.

In einer bevorzugten Ausführungsform der Erfindung kann als Silan das Bis(triethoxysilylpropyl)tetrasulfan eingesetzt werden.

Die erfindungsgemäße Kieselsäure kann in Elastomerenmischungen, Reifen odervulkanisierbaren Kautschukmischungen als Verstärkerfüllstoff in Mengen von 5 bis 200 Teilen, bezogen auf 100 Teile Kautschuk als Pulver, kugelförmiges Produkt oder Granulat sowohl mit Silanmodifizierung als auch ohne Silanmodifizierung eingemischt werden. Kautschuk- und Elastomerenmischungen sind im Sinne der vorliegenden Erfindung als äquivalent zu betrachten.

Die Silanolgruppen auf der Kieselsäureoberfläche fungieren in Kautschuk-, bzw. in Gummimischungen als mögliche chemische Reaktionspartner mit einem Kopplungsreagens. Dieses ist zum Beispiel ein bifunktionelles Silan wie Bis(3-triethoxysilylpropyl)tetrasulfan, welches die Anbindung der Kieselsäure an die Kautschukmatrix ermöglicht. Durch eine möglichst hohe Anzahl an Silanolgruppen erreicht man also eine hohe Wahrscheinlichkeit einer Kopplung zwischen Kieselsäure und dem Kopplungsreagens und dadurch eine hohe Wahrscheinlichkeit der Anbindung der Kieselsäure an die Kautschukmatrix, was letztendlich zu einem höherem Verstärkungspotential führt. Die Searszahl $V_2$ ist ein Maß zur Beschreibung der Silanolgruppenanzahl der Kieselsäure, während die BET-Oberfläche einer Kieselsäure deren spezifische Oberfläche beschreibt, welche einen großen Einfluß auf das Verarbeitungsverhalten und andere gummitechnische Eigenschaften eines Compounds hat. Die Angabe der absoluten Zahl der Silanolgruppen alleine reicht jedoch nicht aus, um eine Fällungskieselsäure hinreichend zu charakterisieren, da Fällungskieselsäuren mit hoher Oberfläche in der Regel eine höhere absolute Anzahl an Silanolgruppen aufweisen als Fällungskieselsäuren mit einer niedrigen Oberfläche. Wichtig ist daher der Quotienten aus Searszahl $V_2$/BET. So wird das durch die Silanolgruppen generierte Verstärkungspotential pro eingebrachter, spezifischer Oberflächeneinheit darstellbar.

Neben Mischungen, die ausschließlich die erfindungsgemäßen Kieselsäuren, mit und ohne den genannten Organosilanen, als Füllstoffe enthalten, können die Elastomeren- oder Kautschukmischungen zusätzlich mit einem oder mehreren mehr oder weniger verstärkenden Füllstoffen gefüllt sein.

Als weitere Füllstoffe können folgende Materialien eingesetzt werden:

- Ruße: Die hierbei zu verwendenden Ruße sind nach dem Flammruß-, Fumace- oder Gasruß-Verfahren hergestellt und besitzen BET-Oberflächen von 20 bis 200 $m^2/g$, wie z. B. SAF-, ISAF-, HSAF-, HAF-, FEF- oder GPF-Ruße. Die Ruße können gegebenenfalls auch Heteroatome wie zum Beispiel Silizium enthalten.
- hochdisperse pyrogene Kieselsäuren, hergestellt zum Beispiel durch Flammenhydrolyse von Siliziumhalogeniden. Die Kieselsäuren können gegebenenfalls auch als Mischoxide mit anderen Metalloxiden, wie Al-, Mg-, Ca-, Ba-, Zn- und Titanoxiden vorliegen.
- weitere kommerzielle Kieselsäuren
- Synthetische Silicate, wie Aluminiumsilicat, Erdalkalisilicate wie Magnesiumsilicat oder Calciumsilicat, mit BET-Oberflächen von 20 bis 400 $m^2$/g und Primärteilchendurchmessern von 10 bis 400 nm

- Synthetische oder natürliche Aluminiumoxide und -hydroxide
- Natürliche Silicate, wie Kaolin andere natürlich vorkommende Siliziumdioxidverbindungen
- Glasfaser und Glasfaserprodukte (Matten, Stränge) oder Mikroglaskugeln
- Stärke und modifizierte Stärketypen
- Naturfüllstoffe, wie zum Beispiel Clays und Kieselkreide

Das Verschnittverhältnis richtet sich auch hier, wie bei der Dosierung der Organosilane, nach dem zu erzielenden Eigenschaftsbild der fertigen Gummimischung. Ein Verhältnis von 5 - 95 % zwischen den erfindungsgemäßen Kieselsäuren und den anderen oben genannten Füllstoffen (auch als Gemisch) ist denkbar und wird in diesem Rahmen auch realisiert.

In einer besonders bevorzugten Ausführungsform können 10 bis 150 Gew.-Teile Kieselsäuren, ganz oder teilweise bestehend aus der erfindungsgemäßen Kieselsäure, gegebenenfalls zusammen mit 0 bis 100 Gew.-Teilen Ruß, sowie 1 bis 10 Gew.-Teile einer Organosiliziumverbindung, jeweils bezogen auf 100 Gew.-Teile Kautschuk, zur Herstellung der Mischungen eingesetzt werden.

Neben den erfindungsgemäßen Kieselsäuren, den Organösilanen und anderen Füllstoffen bilden die Elastomere einen weiteren wichtigen Bestandteil der Kautschukmischung. Zu nennen wären hierbei Elastomere, natürliche und synthetische, ölgestreckt oder nicht, als Einzelpolymer oder Verschnitt (Blend) mit anderen Kautschuken, wie zum Beispiel Naturkautschuke, Polybutadien (BR), Polyisopren (IR), Styrol/Butadien-Copolymerisate mit Styrolgehalten von 1 bis 60, vorzugsweise 2 bis 50 Gew.-% (SBR) insbesonders hergestellt mittels des Lösungspolymerisationsverfahrens, Butylkautschuke, Isobutylen/Isopren-Copolymerisate (IIR), Butadien/Acrylnitril-Copolymere mit Acrylnitrilgehalten von 5 bis 60, vorzugsweise 10 bis 50 Gew.-% (NBR), teilhydrierter oder vollständig hydrierter NBR-Kautschuk (HNBR), Ethylen/ Propylen/Dien-Copolymerisate (EPDM), sowie Mischungen dieser Kautschuke.

Ferner kommen für Kautschukgemische mit den genannten Kautschuken die folgenden zusätzlichen Kautschuke in Frage: Carboxylkautschuke, Epoxidkautschuke, Trans-Polypentenamer, halogenierte Butylkautschuke, Kautschuke aus 2-Chlor-Butadien, EthylenVinylacetat-Copolymere, Ethylen-Propylen-Copolymere, gegebenenfalls auch chemische Derivate des Naturkautschuks sowie modifizierte Naturkautschuke.

Bevorzugte Synthesekautschuke sind beispielsweise bei W. Hofmann, "Kautschuktechnologie", GenterVerlag, Stuttgart 1980, beschrieben.

Für die Herstellung der erfindungsgemäßen Reifen sind insbesondere anionisch polymerisierte L-SBR-Kautschuke (Lösungs-SBR) mit einer Glasübergangstemperatur oberhalb von -50 °C sowie deren Mischungen mit Dienkautschuken von Interesse.

Die erfindungsgemäßen Kieselsäuren, mit oder ohne Silan, können Einsatz in allen Gummianwendungen, wie zum Beispiel Formkörper, Reifen, Reifenlaufflächen, Fördergurte, Förderbänder, Dichtungen, Treibriemen, Schläuche, Schuhsohlen, Kabelmäntel, Walzenbeläge, Dämpfungselemente etc. finden.

Die Einarbeitung dieser Kieselsäure und die Herstellung derdiese Kieselsäure enthaltenden Mischungen erfolgt in der in der Gummiindustrie üblichen Art und Weise auf einem Innenmischer oder Walzwerk bei bevorzugt 80 - 200 °C. Die Darreichungs- bzw. Einsatzform der Kieselsäuren kann sowohl als Pulver, kugelförmiges Produkt oder Granulat erfolgen. Auch hier unterscheiden sich die erfindungsgemäßen Kieselsäuren nicht von den bekannten hellen Füllstoffen.

Die erfindungsgemäßen Kautschukvulkanisate können weitere Kautschukhilfsstoffe in den üblichen Dosierungen enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren, wie Triethanolamin, Polyethylenglykol, Hexantriol. Diese Verbindungen sind in der Kautschukindustrie bekannt.

Die Kautschukhilfsmittel können in bekannten Mengen, die sich unter anderem nach dem Verwendungszweck richten, eingesetzt werden. Übliche Mengen sind zum Beispiel Mengen von 0.1 bis 50 Gew.-%, bezogen auf den eingesetzten Kautschuk. Als Vernetzer können Schwefel oder schwefelspendende Substanzen eingesetzt werden. Die erfindungsgemäßen Kautschukmischungen können darüber hinaus Vulkanisationsbeschleuniger enthalten. Beispiele fürgeeignete Hauptbeschleunigersind Mercaptobenzthiazole, Sulfenamide, Thiurame, Dithiocarbamate in Mengen von 0.5 bis 3 Gew.-%. Beispiele für Cobeschleuniger sind Guanidiene, Thioharnstoff und Thiocarbonate in Mengen von 0.5 bis 5 Gew.-%. Schwefel kann üblicherweise in Mengen von 0.1 bis 10 Gew.-%, bevorzugt 1 bis 3 Gew.-%, bezogen auf den eingesetzten Kautschuk, eingesetzt werden.

Die erfindungsgemäßen Kieselsäuren können in Kautschuken eingesetzt werden, die mit Beschleunigern und/ oder Schwefel, aber auch peroxidisch vernetzbar sind.

Die Vulkanisation der erfindungsgemäßen Kautschukmischungen kann bei Temperaturen von 100 bis 200 °C, bevorzugt 130 bis 180 °C, gegebenenfalls unter Druck von 10 bis 200 bar erfolgen. Die Abmischung der Kautschuke mit dem Füllstoff, gegebenenfalls Kautschukhilfsmitteln und der Organosiliziumverbindung kann in bekannten Mischaggregaten, wie Walzen, Innenmischern und Mischextrudem, durchgeführt werden.

Die erfindungsgemäßen Kautschukmischungen eignen sich zur Herstellung von Formkörper, zum Beispiel für die Herstellung von Luftreifen, Reifenlaufflächen für Sommer-, Winter- und Ganzjahresreifen, PKW-Reifen, Reifen für Nutzfahrzeuge, Motorradreifen, Reifenunterbauteilen, Kabelmänteln, Schläuchen, Treibriemen, Förderbändern, Walzenbelägen, Schuhsohlen, Dichtungsringen und Dämpfungselementen.

Die erfindungsgemäßen Kieselsäuren haben den Vorteil, dass sie hochdispersibel sind und den Kautschukvulkanisaten aufgrund ihrer geringen Mikroporosität eine höhere Kautschukaktivität aufweisen und dadurch eine höhere Verstärkung verleihen.

Gegenüber einer gleichen Kautschukmischung mit einer Kieselsäuren nach dem Stand der Technik zeigen die erfindungsgemäßen Kieselsäuren ferner Vorteile in der Vulkanisationszeit.

Die erfindungsgemäßen Kautschukmischungen sind insbesondere fürdie Herstellung von PKW- und Motorrad-Reifenlaufflächen aber auch Reifen für Nutzfahrzeuge mit erniedrigtem Rollwiderstand bei gutem Abriebswiderstand geeignet und guter Wintertauglichkeit geeignet.

Ferner eignen sich die erfindungsgemäßen Kautschukmischungen, ohne dem Zusatz von Organosiliziumverbindungen, im Blend mit einem typischen Laufflächenruß auch zur Verbesserung des Cut & Chip Verhaltes von Bau-, Landmaschinen- und Grubenreifen (Definition und weitere Ausführungen siehe "New insights into the tear mechanism" und Referenzen hierin, präsentiert auf derTire Tech 2003 in Hamburg von Dr. W. Niedermeier).

Die Reaktionsbedingungen und die physikalisch/chemischen Daten der erfindungsgemäßen Fällungskieselsäuren werden mit den folgenden Methoden bestimmt:

## Bestimmung der Feuchte von Kieselsäuren

Nach dieser Methode werden in Anlehnung an ISO 787-2 die flüchtigen Anteile (im folgenden der Einfachheit halber Feuchte genannt) von Kieselsäure nach 2 stündiger Trocknung bei 105 °C bestimmt. Dieser Trocknungsverlust besteht im allgemeinen überwiegend aus Wasserfeuchtigkeit.

### Durchführung

In ein trockenes Wägeglas mit Schliffdeckel (Durchmesser 8 cm, Höhe 3 cm) werden 10 g der pulverförmigen, kugelförmigen oder granulären Kieselsäure auf 0.1 mg genau eingewogen

(Einwaage E). Die Probe wird bei geöffnetem Deckel 2 h bei 105 ± 2 °C in einem Trockenschrank getrocknet. Anschließend wird das Wägeglas verschlossen und in einem Exsikkatorschrank mit Kieselgel als Trocknungsmittel auf Raumtemperatur abgekühlt. Die Auswaage A wird gravimetrisch bestimmt.
Man bestimmt die Feuchte in % gemäß ((E in g - A in g) * 100 %) / (E in g).

## Bestimmung der modifizierten Searszahl von Kieselsäuren

Durch die Titration von Kieselsäure mit Kaliumhydroxid-Lösung im Bereich von pH 6 bis pH 9 läßt sich die modifizierte Searszahl (im folgenden Searszahl $V_2$ genannt) als Maß für die Zahl an freien Hydroxy-Gruppen bestimmen.

Der Bestimmungsmethode liegen die folgenden chemischen Reaktionen zu Grunde, wobei "Si"-OH eine Silanolgruppe der Kieselsäure symbolisieren soll:

$$\text{„Si"–OH} + NaCl \Rightarrow \text{„Si"–ONa} + HCl$$

$$HCl + KOH \Rightarrow KCl + H_2O.$$

### Durchführung

10.00 g einer pulverförmigen, kugelförmigen oder granulären Kieselsäure mit 5 ± 1 % Feuchte werden 60 Sekunden mit einer IKA-Universalmühle M 20 (550 W; 20 000 U/min) zerkleinert. Gegebenenfalls muß der Feuchtegehalt der Ausgangssubstanz durch Trocknen bei 105 °C im Trockenschrank oder gleichmäßiges Befeuchten eingestellt und die Zerkleinerung wiederholt werden. 2.50 g der so behandelten Kieselsäure werden bei Raumtemperatur in ein 250 ml Titriergefäß eingewogen und mit 60.0 ml Methanol p. A. versetzt. Nach vollständiger Benetzung der Probe werden 40.0 ml entionisiertes Wasser zugegeben und man dispergiert mittels eines Ultra Turrax T 25 Rührers (Rührwelle KV-18G, 18 mm Durchmesser) 30 Sekunden lang bei einer Drehzahl von 18 000 U/min. Mit 100 ml entionisiertem Wasser werden die am Gefäßrand und Rührer anhaftenden Probepartikel in die Suspension gespült und in einem thermostatisiertem

Wasserbad auf 25 °C temperiert.

Das pH-Messgerät (Fa. Knick, Typ: 766 pH-Meter Calimatic mit Temperaturfühler) und die pH-Elektrode (Einstabmesskette der Fa. Schott, Typ N7680) werden unter Verwendung von Pufferlösungen (pH 7.00 und 9.00) bei Raumtemperatur kalibriert. Mit dem pH-Meter wird zunächst der Ausgangs-pH-Wert der Suspension bei 25 °C gemessen, danach wird je nach Ergebnis mit Kaliumhydroxid-Lösung (0.1 mol/l)bzw. Salzsäurelösung (0.1 mol/l) derpH-Wert auf 6.00 eingestellt. Der Verbrauch an KOH- bzw. HCl-Lösung in ml bis pH 6.00 entspricht $V_1$'.

Danach werden 20.0 ml Natriumchlorid-Lösung (250.00 g NaCl p. A. mitentionisiertem Wasser auf 1 l aufgefüllt) zudosiert. Mit 0.1 mol/l KOH wird dann die Titration bis zum pH-Wert 9.00 fortgesetzt. Der Verbrauch an KOH-Lösung in ml bis pH 9.00 entspricht $V_2$'.

Anschliessend werden die Volumina $V_1$', bzw. $V_2$' zunächst auf die theoretische Einwaage von 1 g normiert und mit 5 erweitert, woraus sich $V_1$ und die Searszahl $V_2$ in den Einheiten ml/(5 g) ergeben.

**Bestimmung der BET-Oberfläche**

Die spezifische Stickstoff-Oberfläche (im folgenden BET-Oberfläche genannt) der pulverförmigen, kugelförmigen oder granulären Kieselsäure wird gemäß ISO 5794-1/Annex D mit einem AREA-meter (Fa. Ströhlein, JUWE) bestimmt.

**Bestimmung der CTAB-Oberfläche**

Die Methode beruht auf der Adsorption von CTAB (N-Hexadecyl-N,N,N-trimethylammoniumbromid) an der "äußeren" Oberfläche der Kieselsäure, die auch als "kautschukwirksame Oberfläche" bezeichnet wird, in Anlehnung an die ASTM 3765, bzw. NFT 45-007 (Kapitel 5.12.1.3). Die Adsorption von CTAB erfolgt in wässriger Lösung unter Rühren und Ultraschallbehandlung. Überschüssiges, nicht adsorbiertes CTAB wird durch Rücktitration mit NDSS (Dioctylnatriumsulfosuccinat-Lösung, "Aerosol OT"-Lösung) mit einem Titroprozessor ermittelt, wobei der Endpunkt durch das Maximum der Trübung der Lösung gegeben ist und mit einer Phototrode bestimmt wird. Die Temperatur während aller durchgeführten Operationen beträgt 23-25 °C um das Auskristallisieren von CTAB zu verhindern. Der Rücktitration liegt die folgende Reaktionsgleichung zu Grunde:

$$\underset{\text{NDSS}}{(C_{20}H_{37}O_4)SO_3Na} + \underset{\text{CTAB}}{BrN(CH_3)_3(C_{16}H_{33})} \Rightarrow (C_{20}H_{37}O_4)SO_3N(CH_3)_3(C_{16}H_{33}) + NaBr$$

**Geräte**

Titroprozessor METTLER Toledo Typ DL 55 und Titroprozessor METTLER Toledo Typ DL 70, jeweils ausgerüstet mit: pH-Elektrode, Fabrikat Mettler, Typ DG 111 und Phototrode, Fabrikat Mettler, Typ DP 550

Titrierbecher 100 ml aus Polypropylen

Titrierglasgefäß, 150 ml mit Deckel

Druckfiltrationsgerät, 100 ml Inhalt

Membranfilter aus Cellulosenitrat, Porengröße 0.1 μm, 47 mm Ø, z. B. Whatman (Best. Nr. 7181-004)

**Reagenzien**

Die Lösungen von CTAB (0.015 mol/l in entionisiertem Wasser) und NDSS (0.00423 mol/l in entionisiertem Wasser) werden gebrauchsfertig bezogen (Fa. Kraft, Duisburg: Bestell-Nr. 6056.4700 CTAB-Lösung 0.015 mol/l; Bestell-Nr. 6057.4700 NDSS-Lösung 0.00423 mol/l), bei 25 °C aufbewahrt und innerhalb von einem Monat aufgebraucht.

**Durchführung**

**Blindtitration**

Der Verbrauch an NDSS-Lösung zur Titration von 5 ml CTAB-Lösung ist 1 x täglich vor jeder Meßreihe zu prüfen. Dazu wird die Phototrode vor Beginn derTitration auf 1000 ± 20 mV eingestellt (entsprechend einerTransparenz von 100 %).

Es werden genau 5.00 ml CTAB-Lösung in einen Titrierbecher pipettiert und man fügt 50.0 ml entionisiertes Wasser hinzu. Unter Rühren erfolgt die Titration mit NDSS-Lösung nach der dem Fachmann geläufigen Meßmethode mit dem

Titroprozessor DL 55 bis zur max. Trübung der Lösung. Man bestimmt den Verbrauch $V_1$ an NDSS-Lösung in ml. Jede Titration ist als Dreifachbestimmung auszuführen.

**Adsorption**

10.0 g der pulverförmigen, kugelförmigen oder granulierten Kieselsäure mit einem Feuchtegehalt von 5 $\pm$ 2 % (gegebenenfalls wird der Feuchtegehalt durch Trocknen bei 105 °C im Trockenschrank oder gleichmäßiges Befeuchten eingestellt) werden mit einer Mühle (Fa. Krups, Model KM 75, Artikel Nr. 2030-70) 30 Sekunden lang zerkleinert. Genau 500.0 mg der zerkleinerten Probe werden in ein 150 ml Titriergefäß mit Magnetrührstäbchen überführt und es werden genau 100.0 ml CTAB-Lösung zudosiert. Das Titriergefäß wird mit einem Deckel verschlossen und 15 Minuten mit einem Magnetrührer gerührt. Hydrophobe Kieselsäuren werden mit einem Ultra Turräx T 25 Rührer (Rührwelle KV-18G, 18 mm Durchmesser) bei 18 000 U/min maximal 1 min lang bis zur vollständigen Benetzung gerührt. Das Titriergefäß wird an den Titroprozessor DL 70 geschraubt und der pH-Wert der Suspension wird mit KOH (0.1 mol/l) auf einen Wert von 9 $\pm$ 0.05 eingestellt. Es erfolgt eine 4 minütige Beschallung der Suspension in dem Titriergefäß in einem Ultraschallbad (Fa. Bandelin, Sonorex RK 106 S, 35 kHz) bei 25 °C. Anschließend erfolgt eine umgehende Druckfiltration durch einen Membranfilter bei einem Stickstoffdruck von 1.2 bar. Der Vorlauf von 5 ml wird verworfen.

**Titration**

5.00 ml des übrigen Filtrats werden in einen 100 ml Titrierbecher pipettiert und mit entionisiertem Wasser auf 50.00 ml aufgefüllt. Der Titrierbecher wird an den Titroprozessor DL 55 geschraubt und unter Rühren erfolgt die Titration mit NDSS-Lösung bis zur maximalen Trübung. Man bestimmt den Verbrauch $V_n$ an NDSS-Lösung in ml. Jede Trübung ist als Dreifachbestimmung auszuführen.

**Berechnung**

Mit Hilfe der Meßwerte

$V_I$ = Verbrauch an NDSS-Lösung in ml bei der Titration der Blindprobe
$V_{II}$ = Verbrauch an NDSS-Lösung in ml bei Verwendung des Filtrats

ergibt sich:

$V_I/V_{II}$ = Stoffmenge CTAB der Blindprobe / noch vorhandene Stoffmenge CTAB in der Filtratprobe.

Daraus folgt für die adsorbierte Stoffmenge N an CTAB in g:

$$N = ((V_I - V_{II}) * 5.5\ g * 5\ ml) / (V_I * 1000\ ml).$$

Da von 100 ml Filtrat nur 5 ml titriert wurden, 0.5 g Kieselsäure einer definierten Feuchte eingesetzt wurden und der Platzbedarf von 1 g CTAB 578435 * $10^{-3}$ $m^2$ beträgt, folgt daraus: CTAB-Oberfläche (nicht wasserkorrigiert) in $m^2/g$ = (N* 20 * 578.435 $m^2/g$) / (0.5 g) und CTAB-Oberfläche (nicht wasserkorrigiert) in $m^2/g$ = (($V_I$ - $V_{II}$) * 636.2785 $m^2/g$) / $V_I$. Die CTAB-Oberfläche wird auf die wasserfreie Kieselsäure bezogen, weshalb die folgende Korrektur durchgeführt wird.

**CTAB-Oberfläche in m²/g = (CTAB-Oberfläche (nicht wasserkorrigiert) in m²/g * 100 %) / (100 % – Feuchte in %).**

CTAB-Oberfläche in $m^2/g$ = (CTAB-Oberfläche (nicht wasserkorrigiert) in $m^2/g$ * 100 %) / (100 % - Feuchte in %).

**<u>Bestimmung der DBP-Aufnahme</u>**

Die DBP-Aufnalune (DBP-Zahl), die ein Maß für die Saugfähigkeit der Fällungskieselsäure ist, wird in Anlehnung an die Norm DIN 53601 wie folgt bestimmt:

**Durchführung**

12.50 g pulverförmige oder kugelförmige Kieselsäure mit 0 - 10 % Feuchtegehalt (gegebenenfalls wird der Feuchtegehalt durch Trocknen bei 105 °C. im Trockenschrank eingestellt) werden in die Kneterkammer (Artikel Nummer 279061) des Brabender-Absorptometer "E" gegeben (ohne Dämpfung des Ausgangsfilters des Drehmomentaufnehmers). Im Falle von Granulaten wird die Siebfraktion von 3.15 bis 1 mm (Edelstahlsiebe der Fa. Retsch) verwendet (durch sanftes Drücken der Granulate mit einem Kunststoffspatel durch das Sieb mit 3.15 mm Porenweite). Unter ständigem Mischen (Umlaufgeschwindigkeit der Kneterschaufeln 125 U/min) tropft man bei Raumtemperatur durch den "Dosimaten Brabender T90/50" Dibutylphthalat mit einer Geschwindigkeit von 4 ml/min in die Mischung. Das Einmischen erfolgt mit nur geringem Kraftbedarf und wird anhand der Digitalanzeige verfolgt. Gegen Ende der Bestimmung wird das Gemisch pastös, was mittels eines steilen Anstieges des Kraftbedarfs angezeigt wird. Bei einer Anzeige von 600 digits (Drehmoment von 0.6 Nm) wird durch einen elektrischen Kontakt sowohl der Kneter als auch die DBP-Dosierung abgeschaltet. Der Synchronmotor für die DBP-Zufuhr ist mit einem digitalen Zählwerk gekoppelt, so dass der Verbrauch an DBP in ml abgelesen werden kann.

**Auswertung**

Die DBP-Aufnahme wird in g/(100 g) angegeben und anhand der folgenden Formel aus dem gemessenen DBP-Verbrauch berechnet. Die Dichte von DBP beträgt bei 20 °C typischer Weise 1.047 g/ml.

**DBP-Aufnahme in g/(100 g) = ((Verbrauch an DBP in ml) * (Dichte des DBP in g/ml) * 100) / (12.5 g).**

Die DBP-Aufnahme ist für die wasserfreie, getrocknete Kieselsäure definiert. Bei Verwendung von feuchten Fällungskieselsäuren ist der Wert mittels der folgenden Korrekturtabelle zu korrigieren. Der Korrekturwert entsprechend dem Wassergehalt wird zu dem experimentell bestimmten DBP-Wert addiert; z. B. würde ein Wassergehalt von 5.8 % einen Zuschlag von 33 g/(100 g) für die DBP-Aufnahme bedeuten.

**Korrekturtabelle für Dibutylphthalataufnahme -wasserfrei-**

| | **.% Wasser** | | | | |
|---|---|---|---|---|---|
| **% Wasser** | .0 | .2 | .4 | .6 | .8 |
| 0 | 0 | 2 | 4 | 5 | 7 |
| 1 | 9 | 10 | 12 | 13 | 15 |
| 2 | 16 | 18 | 19 | 20 | 22 |
| 3 | 23 | 24 | 26 | 27 | 28 |
| 4 | 28 | 29 | 29 | 30 | 31 |
| 5 | 31 | 32 | 32 | 33 | 33 |
| 6 | 34 | 34 | 35 | 35 | 36 |
| 7 | 36 | 37 | 38 | 38 | 39 |
| 8 | 39 | 40 | 40 | 41 | 41 |
| 9 | 42 | 43 | 43 | 44 | 44 |
| 10 | 45 | 45 | 46 | 46 | 47 |

**pH-Wert-Bestimmung**

Das Verfahren in Anlehnung an DIN EN ISO 787-9 dient zur Bestimmung des pH-Wertes einer wässrigen Suspension von Kieselsäuren bei 20 °C. Dazu wird eine wässrige Suspension der zu untersuchenden Probe hergestellt. Nach kurzzeitigem Schütteln der Suspension wird deren pH-Wert mittels eines zuvor kalibrierten pH-Meters bestimmt.

**Durchführung**

Vor der Durchführung der pH-Messung ist das pH-Messgerät (Fa. Knick, Typ: 766 pH-Meter Calimatic mit Temperaturfühler) und die pH-Elektrode (Einstabmesskette der Fa. Schott, Typ N7680) täglich unter Verwendung der Pufferlösungen bei 20 °C zu kalibrieren. Die Kalibrierungsfunktion ist so zu wählen, dass die zwei verwendeten Pufferlösungen den erwarteten pH-Wert der Probe einschließen (Pufferlösungen mit pH 4.00 und 7.00, pH 7.00 und pH 9.00 und ggf. pH 7.00 und 12.00). Bei Verwendung von Granulaten werden zunächst 20.0 g Kieselsäure mittels einer Mühle (Fa. Krups, Modell KM 75, Artikel Nr. 2030-70) 20 s lang zerkleinert.
5.00 g pulverförmige oder kugelförmigen Kieselsäure mit 5 ± 1 % Feuchtegehalt (gegegebenfalls wird der Feuchtegehalt durch Trocknen bei 105 °C im Trockenschrank oder gleichmäßiges Befeuchten vor der evtl. Zerkleinerung eingestellt) werden auf einer Präzisionswaage auf 0.01 g genau in eine zuvor tarierte Glas-Weithalsflasche eingewogen. 95.0 ml entionisiertes Wasser werden zu der Probe gegeben. Anschließend wird die Suspension im verschlossenen Gefäß für die Dauer von 5 Minuten mittels einer Schüttelmaschine (Fa. Gerhardt, Modell LS10, 55 W, Stufe 7) bei Raumtemperatur geschüttelt. Die Messung des pH-Wertes erfolgt direkt im Anschluss an das Schütteln. Dazu wird die Elektrode zunächst mit entionisierten Wasser, nachfolgend mit einem Teil der Suspension abgespült und anschließend in die Suspension eingetaucht. Nach Zugabe eines Magnetfisches in die Suspension wird bei einer konstanten Rührgeschwindigkeit mit leichter Trombenbildung der Suspension die pH-Messung durchgeführt. Wenn das pH-Meter einen gleichbleibenden Wert anzeigt, wird der pH-Wert an der Anzeige abgelesen.

Bei der Verwendung von hydrophober Kieselsäure erfolgt die Durchführung analog, allerdings werden dann 5.00 g der evtl. zerldeinerten Probe mit 5 ± 1 % Feuchtegehalt auf der Präzisionswaage auf 0.01 g genau in eine zuvor tarierte Glas-Weithalsflasche eingewogen. Es werden 50.0 ml Methanol p. A. und 50.0 ml entionisiertes Wasser hinzugegeben und anschließend wird die Suspension im verschlossenen Gefäß für die Dauer von 5 Minuten mittels einer Schüttelmaschine (Fa. Gerhardt, Modell LS10, 55 W, Stufe 7) bei Raumtemperatur geschüttelt. Die Messung des pH-Wertes erfolgt ebenfalls unter Rühren, allerdings nach exakt 5 min.

**Bestimmung des Feststoffgehalts von Filterkuchen**

Nach dieser Methode wird der Feststoffgehalt von Filterkuchen durch Entfernen der flüchtigen Anteile bei 105 °C bestimmt.

**Durchführung**

In eine trockene, tarierte Porzellanschale (Durchmesser 20 cm) werden 100.00 g des Filterkuchens eingewogen (Einwaage E). Gegebenenfalls wird der Filterkuchen mit einem Spatel zerkleinert, um lockere Brocken von maximal 1 $cm^3$ zu erhalten. Die Probe wird bei 105 ± 2 °C in einem Trockenschrank bis zur Gewichtskonstanz getrocknet. Anschließend wird die Probe in einem Exsikkatorschrankmit Kieselgel alsTrocknungsmittel auf Raumtemperaturabgekühlt. Die Auswaage A wird gravimetrisch bestimmt.

Man bestimmt die Feststoffgehalt in % gemäß 100 % – (((E in g – A in g) * 100 %) / (E in g)).

**Bestimmung der elektrischen Leitfähigkeit**

Die Bestimmung der elektrischen Leitfähigkeit (LF) von Kieselsäuren wird in wässriger Suspension durchgeführt.

Durchführung

Bei Verwendung von Granulaten werden zunächst 20.0 g Kieselsäure mittels einer Mühle (Fa. Krups, Modell KM 75, Artikel Nr. 2030-70) 20 s lang zerkleinert. 4.00 g pulverförmige oder kugelförmige Kieselsäure mit 5 ± 1 % Feuchtegehalt (gegebenenfalls wird der Feuchtegehalt durch Trocknen bei 105 °C im Trockenschrank oder gleichmäßiges Befeuchten vor der evtl. Zerkleinerung eingestellt) werden in 50.0 ml entionisiertem Wasser suspendiert und 1 min auf 100 °C erhitzt. Die auf 20 °C abgekühlte Probe wird auf genau 100 ml aufgefüllt und durch Umschütteln homogenisiert.
Die Meßzelle des Leitfähigkeitsmeßgeräts LF 530 (Fa. WTW) wird mit einer kleinen Probenmenge gespült, bevor die Meßzelle LTA01 in die Suspension getaucht wird. Der am Display angezeigte Wert entspricht der Leitfähigkeit bei 20 °C, da der externe Temperaturfühler TFK 530 eine automatische Temperaturkompensation durchführt. Dieser Temperaturkoeffizient als auch die Zellenkonstante k sind vor jeder Meßreihe zu überprüfen.
Als Kalibrierlösung wird 0.01 mol/l Kaliumchlorid-Lösung verwendet (LF bei 20 °C = 1278 µS/cm).

## Bestimmung des Feststoffgehalts von Fällsuspensionen

Der Feststoffgehalt der Fällsuspension wird gravimetrisch nach Filtration der Probe bestimmt.

### Durchführung

100.0 ml der homogenisierten Fällsuspension ($V_{Suspension}$) werden bei Raumtemperatur mit Hilfe eines Messzylinders abgemessen. Die Probe wird über einen Rundfilter (TYP 572, Fa. Schleicher & Schuell) in einer Porzellannutsche abgenutscht, aber nicht trockengesaugt, um Rißbildung des Filterkuchens zu verhindern. Anschließend wäscht man den Filterkuchen mit 100.0 ml entionisertem Wasser. Der ausgewaschene Filterkuchen wird komplett abgenutscht, in eine tarierte Porzellanschale überführt und bei 105 ± 2 °C in einem Trockenschrank bis zur Gewichtskonstanz getrocknet. Das Gewicht der getrockneten Kieselsäure ($m_{Probe}$) wird ermittelt. Der Feststoffgehalt bestimmt sich gemäß:

$$\text{Feststoffgehalt in g/l} = (m_{Probe} \text{ in g}) / (V_{Suspension} \text{ in l}).$$

## Bestimmung der Alkalizahl

Als Alkalizahl-Bestimmung (AZ), versteht man den Verbrauch an Salzsäure in ml (bei 50 ml Probevolumen, 50 ml dest. Wasser und einer verwendeten Salzsäure der Konzentration 0.5 mol/l) bei einer direkten potentiometrischen Titration von alkalischen Lösungen, bzw. Suspensionen bis zu einem pH-Wert von 8.30. Man erfasst hiermit den freien Alkaligehalt der Lösung bzw. Suspension.

Durchführung

Das pH-Gerät (Fa. Knick, Typ: 766 pH-Meter Calimatic mit Temperaturfühler) und die pH-Elektrode (Einstabmesskette der Fa. Schott, Typ N7680) wird mit Hilfe zweier Pufferlösungen (pH = 7.00 und pH = 10.00) bei Raumtemperatur kalibriert. Die Einstabmesskette wird in die auf 40 °C temperierte Meßlösung bzw. -suspension bestehend aus 50.0 ml Probe und 50.0 ml entionisiertem Wasser getaucht. Anschließend gibt man tropfenweise Salzsäure-Lösung der Konzentration 0.5 mol/l hinzu, bis sich ein konstanter pH-Wert von 8.30 einstellt. Auf Grund des sich erst langsam einstellenden Gleichgewichts zwischen der Kieselsäure und dem freien Alkaligehalt bedarf es einer Wartezeit von 15 min bis zu einem endgültigen Ablesen des Säureverbrauchs. Bei den gewählten Stoffmengen und Konzentrationen entspricht der abgelesene Salzsäureverbrauch in ml direkt der Alkalizahl, welche dimensionslos angegeben wird.
Die folgende Beispiele sollen die Erfindung näher erläutern, ohne ihren Umfang zu beschränken.

### Beispiel 1

### Kieselsäure 1

In einem Reaktor aus rostfreiem Edelstahl mit Propellerrührsystem und Doppelmantelheizung werden 1550 1 Wasser sowie 141.4 kg Wasserglas (Dichte 1.348 kg/l, 27.0 % $SiO_2$, 8.05 % $Na_2O$) vorgelegt. Anschließend werden unter starken Rühren bei 92 °C für 80 Minuten 5.505 kg/min des oben genannten Wasserglases und ca. 0.65 kg/min Schwefelsäure (Dichte 1.83 kg/l, 96 % $H_2SO_4$) zudosiert. Diese Schwefelsäuredosierung wird so geregelt, dass in dem Reaktionsmedium eine AZ-Zahl von 20 herrscht. Anschließend wird die Wasserglaszugabe gestoppt und die Schwefelsäure weiterzugeführt, bis ein pH von 9.0 (gemessen bei Raumtemperatur) erreicht ist. Die Schwefelsäurezugabe wird gestoppt und die erhaltene Suspension 60 Minuten bei 90 °C nachgerührt. Im Anschluss wird die Schwefelsäurezugabe wieder aufgenommen und ein pH-Wert von 3.5 (gemessen bei Raumtemperatur) eingestellt.
Die erhaltene Suspension wird mit einer Membranfilterpresse filtriert und mit Wasser gewaschen. Der Filterkuchen mit 23 % Feststoffgehalt wird mit wässriger Schwefelsäure und einem Scheraggregat verflüssigt. Die Kieselsäurespeise mit 19 % Feststoffgehalt und einem pH-Wert von 3.7 wird anschliessend unter Ammoniakdosierung sprühgetrocknet.
Das erhaltene Pulver Ia weist eine BET-Oberfläche von 114 $m^2/g$ und eine CTAB-Oberfläche von 123 $m^2/g$ auf. Das alternativ erhaltene düsenturmgetrocknete Micro Bead Produkt Ib weist eine BET-Oberfläche von 126 $m^2/g$ und eine CTAB-Oberfläche von 123 $m^2/g$ auf.

**Kieselsäure II**

In einem Reaktor aus rostfreiem Edelstahl mit Propellerrührsystem und Doppelmantelheizung werden 1550 1 Wasser sowie 141.4 kg Wasserglas (Dichte 1.348 kg/l, 27.0 % $SiO_2$, 8.05 % $Na_2O$) vorgelegt. Anschließend werden unter starken Rühren bei 92 °C für 80 Minuten 5.505 kg/min des oben genannten Wasserglases und ca. 0.65 kg/min Schwefelsäure (Dichte 1.53 kg/l, 96 % $H_2SO_4$) zudosiert. Diese Schwefelsäuredosierung wird so geregelt, dass in dem Reaktionsmedium eine AZ-Zahl von 20 herrscht. Anschließend wird die Wasserglaszugabe gestoppt und die Schwefelsäure weiterzugeführt, bis ein pH von 7.0 (gemessen bei Raumtemperatur) erreicht ist. Die Schwefelsäurezugabe wird gestoppt und die erhaltene Suspension 60 Minuten bei 90 °C nachgerührt. Im Anschluss wird die Schwefelsäurezugabe wieder aufgenommen und ein pH-Wert von 3.5 (gemessen bei Raumtemperatur) eingestellt.
Die erhaltene Suspension wird mit einer Membranfilterpresse filtriert und mit Wasser gewaschen. Der Filterkuchen mit 22 % Feststoffgehalt wird mit wässriger Schwefelsäure und einem Scheraggregat verflüssigt. Die Kieselsäurespeise mit 19 % Feststoffgehalt und einem pH-Wert von 3.6 wird anschliessend unter Ammoniakdosierung düsenturmgetrocknet.
Das erhaltene Micro Bead Produkt weist eine BET-Oberfläche von 116 $m^2$/g und eine CTAB-Oberfläche von 117 $m^2$/g auf.

**Kieselsäure III**

In einem Reaktor aus rostfreiem Edelstahl mit Propellerrührsystem und Doppelmantelheizung werden 1550 1 Wasser sowie 141.4 kg Wasserglas (Dichte 1.348 kg/l, 27.0 % $SiO_2$, 8.05 % $Na_2O$) vorgelegt. Anschließend werden unter starken Rühren bei 92 °C für 100 Minuten 5.505 kg/min des oben genannten Wasserglases und ca. 0.65 kg/min Schwefelsäure (Dichte 1.83 kg/l, 96 % $H_2SO_4$) zudosiert. Diese Schwefelsäuredosierung wird so geregelt, dass in dem Reaktionsmedium eine AZ-Zahl von 20 herrscht. Anschließend wird die Wasserglaszugabe gestoppt und die Schwefelsäure weiterzugeführt, bis ein pH von 9.0 (gemessen bei Raumtemperatur) erreicht ist. Die Schwefelsäurezugabe wird gestoppt und die erhaltene Suspension 60 Minuten bei 90 °C nachgerührt. Im Anschluss wird die Schwefelsäurezugabe wieder aufgenommen und ein pH-Wert von 3.5 (gemessen bei Raumtemperatur) eingestellt. Die erhaltene Suspension wird mit einer Membranfilterpresse filtriert und mit Wasser gewaschen. Der Filterkuchen mit 23 % Feststoffgehalt wird mit wässriger Schwefelsäure und einem Scheraggregat verflüssigt. Die Kieselsäurespeise mit 19 % Feststoffgehalt und einem pH-Wert von 3.8 wird anschliessend unter Ammoniakdosierung sprühgetrocknet.
Das erhaltene pulverförmige Produkt weist eine BET-Oberfläche von 102 $m^2$/g und eine CTAB-Oberfläche von 104 $m^2$/g auf.

Die physikalischen Daten der obigen Kieselsäuren sind in der folgenden Tabelle zusammengestellt:

| | | **KS Ia** | **KS Ib** | **KS II** | **KS III** | **REF** Ultrasil 7000 GR |
|---|---|---|---|---|---|---|
| Finishing | | pH 9 | pH 9 | pH 7 | pH 9 | --- |
| Feuchte | [%] | 4.5 | 5.1 | 5.1 | 5.0 | 5.4 |
| pH | [-] | 5.6 | 5.5 | 5.5 | 5.6 | 6.2 |
| Leitfähigkeit | [µS/cm] | 610 | 550 | 600 | 590 | 620 |
| BET | [$m^2$/g] | 114 | 126 | 116 | 102 | 174 |
| CTAB | [m2/g] | 123 | 123 | 117 | 104 | 163 |
| BET/CTAB | [-] | 0.93 | 1.02 | 0.99 | 0.98 | 1.07 |
| DBP | [g/(100g)] | 278 | 258 | 274 | 256 | 228 |
| Searszahl $V_2$ | [ml/(5 g)] | 22 | 21 | 22 | 22 | 16 |
| Searszahl $V_2$/BET | [ml/(5 $m^2$)] | 0.193 | 0.167 | 0.190 | 0.216 | 0.092 |

**Beispiel 2**

Die erfindungsgemäßen gefällten Kieselsäuren 1 b und **II** aus Beispiel 1 wurden in einer S-SBR/BR Kautschukmischung untersucht. Als Stand der Technik wurde die leicht dispergierbare Kieselsäure Ultrasil 7000 GR (Ref) der Degussa AG ausgewählt.
Die für die Kautschukmischungen verwendete Rezeptur ist in der folgenden Tabelle 1 angegeben. Dabei bedeutet die Einheit phr Gewichtsanteile, bezogen auf 100 Teile des eingesetzten Rohkautschuks.

**Tabelle 1**

| | |
|---|---|
| **1. Stufe** | |
| Buna VSL 5025-1 | 96 |
| Buna CB 24 | 30 |
| Kieselsäure | 80 |
| X50-S | 12.8 |
| ZnO | 2 |
| Stearinsäure | 2 |
| Naftolen ZD | 10 |
| Vulkanox 4020 | 1.5 |
| Protektor G 3108 | 1 |
| **2. Stufe** | |
| Batch Stufe 1 | |
| **3. Stufe** | |
| Batch Stufe 2 | |
| Vulkacit D/C | 2.0 |
| Vulkacit CZ/EG | 1.5 |
| Perkazit TBZTD | 0.2 1.2 |

Bei dem Polymer VSL 5025-1 handelt es sich um ein in Lösung polymerisiertes SBR-Copolymer der Bayer AG mit einem Styrolgehalt von 25 Gew.-% und einem Butadiengehalt von 75 Gew.-%. Das Copolymer enthält 37.5 phr Öl und weist eine Mooney-Vislcosität (ML 1+4/100 °C) von 50 ± 4 auf. Bei dem Polymer Buna CB 24 handelt es sich um ein cis-1,4-Polybutadien (Neodymtyp) der Bayer AG mit cis 1,4-Gehalt von mindestens 97 % und einer Mooney-Viskosität von 44 ± 5.
X50-S ist eine 50/50 Abmischung von Si 69 [Bis(3-triethoxysilylpropyl)tetrasulfan] und Ruß erhältlich von der Degussa AG. Als aromatisches Öl wird Naftolen ZD der Chemetall verwendet. Bei Vulkanox 4020 handelt es sich um 6PPD der Bayer AG und Protektor G 3108 ist ein Ozonschutzwachs der HB-Fuller GmbH. Vulkacit D/C (DPG) und Vulkacit CZ/EG (CBS) sind Handelsprodukte der Bayer AG. Perkazit TBZTD ist von der Akzo Chemie GmbH erhältlich.
Die Kautschukmischungen werden in einem Innenmischer entsprechend der Mischvorschrift in Tabelle 2 hergestellt. In Tabelle 3 sind die verwendeten Methoden für die Gummitestung zusammengestellt. Die Mischungen werden 20 Minuten bei 165 °C vulkanisiert. Tabelle 4 zeigt die Ergebnisse der gummitechnischen Prüfung.

**Tabelle 2**

| **Stufe 1** | |
|---|---|
| **Einstellungen** | |
| MischaggregatWerner & Pfleiderer 1.5N-Typ | |
| Drehzahl | 70 $min^{-1}$ |
| Friktion | 1:1.11 |
| Stempeldruck | 5.5 bar |
| Leervolumen | 1.61 |
| Füllgrad | 0.73 |
| Durchflusstemp. | 70 °C |
| **Mischvorgang** | |
| 0 bis 0.5 min | Buna VSL5025-1 +BunaCB24 |
| 0.5 bis 1.5 min 1/3 Füllstoff, X50-S | |
| 1.5 bis 2.5 min 1/3 Füllstoff | |

(fortgesetzt)

| Stufe 1 | |
|---|---|
| 2.5 bis 3.5 min 1/3 Füllstoff, restliche Bestandteile Stufe 1 | |
| 3.5 bis 4.5 minMischen | |
| 4.5 bis 6.0 minMischen und Ausfahren | |
| Lagerung | 24 h bei Raumtemperatur |
| **Stufe 2** | |
| **Einstellungen** | |
| Mischaggregatwie in Stufe 1 | bis auf: |
| Drehzahl | 80 $min^{-1}$ |
| Durchflusstemp. | 80 °C. |
| Füllgrad | 0.71 |

| | |
|---|---|
| **Mischvorgang** | |
| 0 bis 5 min | Batch Stufe 1, Batchtemperatur 140 - 150 °C durch Drehzahlvariation halten |
| 5 min | Ausfahren |
| Lagerung | 4 h bei Raumtemperatur |
| | |
| **Stufe 3** | |
| **Einstellungen** | |
| Mischaggegatwie in | Stufe 1 bis auf |
| Drehzahl | 40 $min^{-1}$ |
| Durchflusstemp. | 50 °C |
| Füllgrad | 0.69 |
| **Mischvorgang** | |
| 0 bis 2 min | Batch Stufe 2, Bestandteile Stufe 3 |
| 2 min | ausfahren und auf Labormischwalzwerk Fell bilden, (Durchmesser 200 mm, Länge 450 mm, Duchflusstemperatur 50 °C) Homogenisieren:<br>3* links, 3* rechts einschneiden<br>5* bei engem Walzenspalt (1 mm) und<br>5* bei weitem Walzenspalt (3.5 mm) stürzen und Fell ausziehen |

**Tabelle 3**

| Physikalische Testung | | Norm/Bedingungen |
|---|---|---|
| Vulkameterprüfung, 165 °C | | DIN 53529/3, ISO 6502 |
| | Drehmomentsdifferenz Dmax- Dmin [dNm] | |
| | t10% und t90% [min] | |
| Zugversuch am Ring, 23 °C | | DIN 53504, ISO 37 |
| | Spannungswerte 100 % und 300 % [Mpa] | |
| | Verstärkungsfaktor: Spannungswert 300 %/100 % [-] | |
| Shore-A-Härte, 23 °C [-] | | DIN 53 505 |
| Ball Rebound [%], 0°C und 60°C | | DIN EN ISO 8307, Stahlkugel 19mm, 28 g |
| Dispersionskoeffizient [%] | | siehe Text |
| Viskoelastische Eigenschaften, | | DIN 53 513, ISO 2856 |
| 0 und 60 °C, 16 Hz, 50 N Vorkraft und 25 N Amplitudenkraft Meßwertaufnahme nach 2 min Prüfzeit, sprich 2 min Konditionierung | | |

(fortgesetzt)

| Komplexer Modul E* [Mpa]<br>Verlustfaktor tan δ [-] |
|---|

Der Dispersionskoeffizient wurde mittels der Oberflächen-Topographie incl. Medaliakorrektur bestimmt (A. Wehmeier, "Filler Dispersion Analysis by Topography Measurements" Technical Report TR 820, Degussa AG, Advanced Fillers and Pigments Division). Der so bestimmte Dispersionskoeffzient korreliert mit einem Bestimmtheitsmaß von > 0.95 mit dem lichtoptisch bestimmten Dispersionskoeffizienten, wie er z. B. vom Deutschen Institut für Kautschuktechnologie e.V., Hannover/Deutschland bestimmt wird (H. Geisler, "Bestimmung der Mischgüte", präsentiert auf dem DIK-Workshop, 27. - 28. November 1997, Hannover/Germany).

**Tabelle 4**

| **Rohmischungsdaten** | **REF** | **KS Ib** | **KS II** |
|---|---|---|---|
| Dmax-Dmin | 16.4 | 16.5 | 16.1 |
| t10% | 1.4 | 1.8 | 1.8 |
| t90% | 6.2 | 5.5 | 5.6 |
| **Vulkanisatdaten** | | | |
| Spannungswert 100 % | 1.7 | 2.1 | 2.1 |
| Spannungswert 300 % | 9.2 | 12.3 | 12.4 |
| Spannungswert 300 %/100 % | 5.4 | 5.9 | 5.9 |
| Shore-A-Härte | 62 | 64 | 63 |
| Ball-Rebound 0 °C | 15.8 | 15.1 | 14.8 |
| Ball-Rebound 60 °C | 62.5 | 64.2 | 64.4 |
| E* (0 °C) | 19.2 | 19.0 | 18.2 |
| E* (60 °C) | 7.7 | 7.9 | 7.7 |
| tan δ (0 °C) | 0.475 | 0.460 | 0.454 |
| tan δ (60 °C) | 0.124 | 0.108 | 0.106 |
| Dispersionskoeffizient | 94 | 96 | 97 |

Wie man anhand der Daten in Tabelle 4 erkennt, zeigen die Mischungen KS Ib und KS **II** mit den erfindungsgemäßen Kieselsäuren aufgrund der geringeren Mikroporosität und damit geringeren Beschleunigeradsorption auf der Oberfläche eine schnellere Vulkanisationszeit t90% als die Referenzmischung REF. Die vorteilhaft höhere Aktivität dieser Kieselsäuren spiegelt sich in den höheren Spannungswerten 100 % und 300 % sowie dem erhöhten Verstärkungsfaktor wieder. Die dynamischen Kenndaten der Mischungen mit den erfindungsgemäßen Kieselsäuren sind ebenfalls verbessert. Man findet einen niedrigeren Ball-Rebound 0 °C, der eine verbesserte Nassrutschfestigkeit erwarten lässt, und höheren Ball-Rebound 60 °C, der einen günstigeren Rollwiderstand einer Reifenlauffläche andeutet. Die dynamischen Steifigkeiten bei 0 und 60 °C sind gegenüber der Referenzmischung auf gleichem Niveau, während der Hystereseverlust tan δ (60 °C) vorteilhafterweise erniedrigt ist, was einen niedrigeren Rollwiderstand anzeigt. Zudem ist die Dispersionsgüte der erfindungsgemäßen Kieselsäuren außergewöhnlich hoch und u. a. besser als die der bereits leicht dispergierbaren Kieselsäure Ultrasil 7000 GR nach dem Stand der Technik, wodurch Vorteile im Straßenabrieb erreicht werden.

## Patentansprüche

**1.** Fällungskieselsäure **gekennzeichnet durch** folgende physikalisch-chemische Parameter:

| | |
|---|---|
| CTAB-Oberfläche | 100 - 200 $m^2/g$ |
| BET/CTAB-Verhältnis | 0.8-1.05 |
| DBP-Zahl | 210 - 280 g/(100g) |

(fortgesetzt)

| | |
|---|---|
| Searszahl $V_2$ | 10 - 30 ml/(5 g) |
| Feuchte | 4-8% |
| Verhältnis Searszahl $V_2$ zur BET-Oberfläche | 0.150 bis 0.370 ml/(5 $m^2$) |

**2.** Fällungskieselsäure nach Anspruch 1,
**dadurch gekennzeichnet,**
**dass** das Verhältnis BET/CTAB 0.9 bis 1.03 beträgt.

**3.** Fällungskieselsäure nach Anspruch 1 oder 2,
**dadurch gekennzeichnet,**
**dass** die Searszahl $V_2$ 20 bis 30 ml/(5 g) beträgt.

**4.** Fällungskieselsäure nach einem der Ansprüche 1 bis 3,
**dadurch gekennzeichnet,**
**dass** die CTAB-Oberfläche 100 bis 160 $m^2$/g beträgt.

**5.** Fällungskieselsäure nach einem der Ansprüche 1 bis 4,
**dadurch gekennzeichnet,**
**dass** die DBP-Zahl 250 bis 280 g/(100 g) beträgt.

**6.** Fällungskieselsäure nach einem der Ansprüche 1 bis 5,
**dadurch gekennzeichnet,**
**dass** die BET-Oberfläche 80 - 110 $m^2$/g beträgt.

**7.** Fällungskieselsäure nach einem der Ansprüche 1 bis 5,
**dadurch gekennzeichnet,**
**dass** die BET-Oberfläche 110 - 150 $m^2$/g beträgt.

**8.** Fällungskieselsäure nach einem der Ansprüche 1 bis 7,
**dadurch gekennzeichnet,**
**dass** das Verhältnis Searszahl $V_2$ zur BET-Oberfläche 0.170 bis 0.370 ml/(5 $m^2$) beträgt.

**9.** Verfahren zur Herstellung von Fällungskieselsäuren, nach den Ansprüchen 1 bis 8,
**dadurch gekennzeichnet,**
**dass** nacheinander

a) eine wässrige Lösung eines Alkali- oder Erdalkalisilikats und/oder einer organischen und/oder anorganischen Base mit einem pH-Wert von 7 bis 14 vorgelegt,
b) in diese Vorlage unter Rühren bei 55 bis 95 °C für 10 bis 120 Minuten gleichzeitig Wasserglas und ein Säuerungsmittel dosiert,
g) die erhaltene Suspension 1 bis 120 Minuten bei 80 bis 98 °C nachgerührt,
h) mit einem Säuerungsmittel auf einen pH-Wert von 2.5 bis 5 angesäuert und
i) filtriert und getrocknet wird.

**10.** Verfahren nach Anspruch 9,
**dadurch gekennzeichnet,**
**dass** nach Schritt b) ein- bis zweimal die Schritte

c) Stoppen der Zudosierung für 30 bis 90 Minuten unter Einhaltung der Temperatur
und
d) anschließend gegebenenfalls gleichzeitiges Zudosieren von Wasserglas und einem Säuerungsmittel bei gleicher Temperatur unter Rühren für 20 bis 120, bevorzugt 20 bis 80 Minuten

zusätzlich durchgeführt werden.

**11.** Verfahren nach den Ansprüchen 9 und 10,
**dadurch gekennzeichnet,**
**dass** nach b) oder d) der pH-Wert in Schritt e) durch Zugabe eines Säuerungsmittels auf 3 bis 11 eingestellt wird.

**12.** Verfahren nach Anspruch 11,
**dadurch gekennzeichnet,**
**dass** nach Schritt b) oder d) der pH-Wert in Schritt e) durch Zugabe von Säure auf 7 bis 10 eingestellt wird.

**13.** Verfahren nach einem der Ansprüche 11 bis 12,
**dadurch gekennzeichnet,**
**dass** der pH-Wert in einem zusätzlichen Schritt f) durch Zugabe einer basischen Verbindung auf 8 bis 14 erhöht wird.

**14.** Verfahren nach Anspruch 13,
**dadurch gekennzeichnet,**
**dass** als Base ein Alkali- und/oder Erdalkalisilikat und/oder ein Alkali-und/oderein Erdalkalihydroxid verwendet wird.

**15.** Verfahren nach einem der Ansprüche 9 bis 14
**dadurch gekennzeichnet,**
**dass** während einem der Schritte a) bis h) eine Zugabe eines organischen oder anorganischen Salzes erfolgt.

**16.** Verfahren nach einem der Ansprüche 9 bis 15,
**dadurch gekennzeichnet,**
**dass** zur Trocknung ein Stromtrockner, Sprühtrocknen, Etagentrockner, Bandtrockner, Drehrohrtrockner, Flash-Trockner, Spin-Flash-Trockner oder Düsenturm eingesetzt wird.

**17.** Verfahren nach den Ansprüchen 9 bis 16,
**dadurch gekennzeichnet,**
**dass** nach der Trocknung eine Granulation mit einem Walzenkompaktor durchgeführt wird.

**18.** Fällungskieselsäuren nach einem der Ansprüche 1 bis 8 oder hergestellt nach einem der Ansprüche 9 bis 17,
**dadurch gekennzeichnet,**
**dass** ihre Oberflächen mit Organosilanen der Formel I bis III modifiziert sind:

$$[SiR^1_n(RO)_r(Alk)_m(Ar)_p]_q[B] \quad (I),$$

$$SiR^1_n(RO)_{3-n}(Alkyl) \quad (II),$$

oder

$$SiR^1_n(RO)_{3-n}(Alkenyl) \quad (III),$$

in denen bedeuten

B: -SCN, -SH, -Cl. $-NH_2$, $-OC(O)CHCH_2$, $-OC(O)C(CH_3)CH_2$ (wenn q = 1) oder $-S_w-$ (wenn q = 2), wobei B chemisch an Alk gebunden ist,
R und $R^1$: aliphatischer, olefinischer, aromatischer oder arylaromatischer Rest mit 2-30 C-Atomen, der optional mit den folgenden Gruppen substituiert sein kann: Hydroxyl-, Amino-, Alkoholat-, Cyanid-, Thiocyanid-, Halogen-, Sulfon-säure-, Sulfonsäureester-, Thiol-, Benzoesäure-, Benzoesäureester-, Carbonsäure-, Carbonsäureester-, Acrylat-, Metacrylat-, Organosilanrest, wobei R und $R^1$ eine gleiche oder verschiedene Bedeutung oder Substituierung haben können.
n: 0, 1 oder 2,
Alk: einen zweiwertigen unverzweigten oder verzweigten Kohlenwasserstoffrest mit 1 bis 6 Kohlenstoffatomen,
m: 0 oder 1,
Ar: einen Arylrest mit 6 bis 12 C-Atomen, bevorzugt 6 C-Atomen, der mit den folgenden Gruppen substituiert sein kann: Hydroxy-, Amino-, Alkoholat-, Cyanid-, Thiocyanid-, Halogen-, Sulfonsäure-, Sulfonsäureester-, Thiol-, Benzoesäure-, Benzoesäureester-, Carbonsäure-, Carbonsäureester-, Acrylat-, Metacrylat-, Organosilanrest.
p: 0 oder 1, mit der Maßgabe, dass p und n nicht gleichzeitig 0 bedeuten,

q: 1 oder 2,
w: eine Zahl von 2 bis 8,
r: 1, 2 oder 3, mit der Maßgabe, dass r + n + m + p = 4,
Alkyl: einen einwertigen unverzweigten oder verzweigten gesättigten Kohlenwasserstoffrest mit 1 bis 20 Kohlenstoffatomen, bevorzugt 2 bis 8 Kohlenstoffatomen,
Alkenyl: einen einwertigen unverzweigten oder verzweigten ungesättigten Kohlenwasserstoffrest mit 2 bis 20 Kohlenstoffatomen, bevorzugt 2 bis 8 Kohlenstoffatomen.

**19.** Fällungskieselsäuren nach einem der Ansprüche 1 bis 8 oder hergestellt nach einem der Ansprüche 9 bis 17, **dadurch gekennzeichnet,**
**dass** ihre Oberflächen mit Siliciumorganischen Verbindungen der Zusammensetzung $SiR^2_{4-n}X_n$ (mit n =1, 2, 3, 4),
$[SiR^2_xX_yO]_z$ (mit $0 \leq x \leq 2$; $0 \leq y \leq 2$; $3 \leq z \leq 10$, mit x + y = 2),
$[SiR^z_xX_yN]_z$ (mit $0 \leq x \leq 2$; $0 \leq y \leq 2$; $3 \leq z \leq 10$, mit x + y = 2),
$SiR^2_nX_mOSiR^2_oX_p$(mit $0 \leq n \leq 3$; $0 \leq m \leq 3$; $0 \leq 0 \leq 3$; $0 \leq p \leq 3$, mit n+m=3,o+p= 3),
$SiR^2_nX_mNSiR^2_o$(mit $0 \leq n \leq 3$; $0 \leq m \leq 3$; $0 \leq 0 \leq 3$; $0 \leq p \leq 3$, mit n+m=3, o+p= 3),
und/oder
$SiR^2_nX_m[SiR^2_xX_yO]_zSiR^2_oX_p$ (mit $0 \leq n \leq 3$, $0 \leq m \leq 3$; $0 \leq x \leq 2$; $0 \leq y \leq 2$; $0 \leq 2$; $0 \leq 3$; $0 \leq z \leq 10000$, mitn+m=3, x+y=2, o+p=3)
wobei bedeuten
$R^2$: substituierte und/oder unsubstituierte Alkyl- und/oderArylreste mit 1-20 Kohlenstoffatomen und/oder Alkoxy- und/oder Alkenyl- und/oder Alkinyl- -Gruppen und/oder schwefelhaltige Gruppen
X: Silanol-, Amino-, Thiol-, Halogen-, Alkoxy-, Alkenyl- und/oder Wasserstoff-Rest, modifiziert sind.

**20.** Verfahren zur Herstellung der Kieselsäuren gemäß einem der Ansprüche 18 oder 19, **dadurch gekennzeichnet, dass** man die Fällungskieselsäuren mit Organosilanen in Mischungen von 0.5 bis 50 Teilen, bezogen auf 100 Teile Fällungskieselsäure, insbesondere 1 bis 15 Teile, bezogen auf 100 Teile Fällungskieselsäure, modifiziert, wobei die Reaktion zwischen Fällungskieselsäure und Organosilan während der Mischungsherstellung (in situ) oder außerhalb durch Aufsprühen und anschließendes Tempern der Mischung, durch Mischen des Organosilans und der Kieselsäuresusnension mit anschließender Trocknung und Temperung durchgeführt wird.

**21.** Verwendung von Kieselsäuren gemäß einem der Ansprüche 1 bis 20 in Elastomerenmischungen, vulkanisierbaren Kautschukmischungen und/oder sonstigen Vulkanisaten, wie Luftreifen, Reifenlaufflächen, Kabelmänteln, Schläuchen, Treibriemen, Förderbändern, Keilriemen, Walzenbelägen, Reifen, Schuhsohlen, Dichtungen und Dämpfungselementen.

**22.** Verwendung von Kieselsäuren nach einem der Ansprüche 1 bis 20 in Batterieseparatoren, als Anti-Blocking-Mittel, als Mattierungsmittel in Farben und Lacken, als Trägervon Agrarprodukten und Nahrungsmitteln, in Beschichtungen, in Druckfarben, in Feuerlöschpulvern, in Kunststoffen, im Bereich Non impact printing, in Papiermasse, im Bereich Personal care.

**23.** Vulkanisierbare Kautschukmischungen und Vulkanisate, die die Fällungskieselsäure gemäß Anspruch 1 mit folgenden physikalisch-chemischen Parametern

| | |
|---|---|
| CTAB-Oberfläche | 100 - 200 $m^2/g$ |
| BET/CTAB-Verhältnis | 0.8-1.05 |
| DBP-Zahl | 210-280 g/(100 g) |
| Searszahl $V_2$ | 10-30 ml/(5 g) |
| Feuchte | 4-8% |
| Verhältnis Searszahl $V_2$ zur BET-Oberfläche | 0.150 bis 0.370 ml/(5 $m^2$) |

als Füllstoff enthalten.

## Claims

**1.** Precipitated silica **characterized by** the following physical and chemical properties:

| | |
|---|---|
| CTAB surface area | 100-200 $m^2$/g |
| BET/CTAB ratio | 0.8-1.05 |
| DBP value | 210-280 g/(100 g) |
| Sears value $V_2$ | 10-30 ml/(5 g) |
| Moisture level | 4-8%. |
| Ratio of Sears value $V_2$ to BET surface area | 0.150 to 0.370 ml/(5$m^2$). |

2. Precipitated silica according to Claim 1, **characterized in that** the BET/CTAB ratio is from 0.9 to 1.03.

3. Precipitated silica according to Claim 1 or 2, **characterized in that** the Sears value $V_2$ is from 20 to 30 ml/(5 g).

4. Precipitated silica according to any of Claims 1 to 3, **characterized in that** the CTAB surface area is from 100 to 160 $m^2$/g.

5. Precipitated silica according to any of Claims 1 to 4, **characterized in that** the DBP value is from 250 to 280 g/(100 g).

6. Precipitated silica according to any of Claims 1 to 5, **characterized in that** the BET surface area is 80-110 $m^2$/g.

7. Precipitated silica according to any of Claims 1 to 5, **characterized in that** the BET surface area is 110-150 $m^2$/g.

8. Precipitated silica according to any of Claims 1 to 7, **characterized in that** the ratio of Sears value $V_2$ to the BET surface area is from 0.170 to 0.370 ml/(5 $m^2$).

9. Process for preparing precipitated silicas according to Claims 1 to 8, **characterized in that** in succession

   a) an aqueous solution of an alkali metal silicate or alkaline earth metal silicate and/or of an organic and/or inorganic base with pH from 7 to 14 is taken as initial charge,
   b) water glass and an acidifier are metered simultaneously into this initial charge at from 55 to 95°C, with stirring, for from 10 to 120 minutes,
   g) stirring of the resultant suspension is continued at from 80 to 98°C, for from 1 to 120 minutes,
   h) an acidifier is used to acidify to pH of from 2.5 to 5, and
   i) the material is filtered and dried.

10. Process according to Claim 9, **characterized in that** after step b) the additional steps of

    c) stopping the feed for from 30 to 90 minutes while maintaining the temperature, and
    d) then, where appropriate, simultaneously feeding water glass and an acidifier at the same temperature, with stirring, for from 20 to 120 minutes, preferably from 20 to 80 minutes

are carried out once or twice.

**11.** Process according to Claims 9 and 10, **characterized in that**, following b) or d), in step e) the pH is adjusted to from 3 to 11 by adding an acidifier.

**12.** Process according to Claim 11, **characterized in that**, following step b) or d), in step e) the pH is adjusted to from 7 to 10 by adding acid.

**13.** Process according to Claim 11 or 12, **characterized in that** in an additional step f) the pH is increased to from 8 to 14 by adding a basic compound.

**14.** Process according to Claim 13, **characterized in that** the base used comprises an alkali metal silicate and/or alkaline earth metal silicate and/or an alkali metal hydroxide and/or an alkaline earth metal hydroxide.

**15.** Process according to any of Claims 9 to 14, **characterized in that** during one of steps a) to h) an organic or inorganic salt is added.

**16.** Process according to any of Claims 9 to 15, **characterized in that** for the drying process use is made of a pneumatic drier, spray drier, disk drier, belt drier, rotating-tube drier, flash drier, spin flash drier, or spray tower.

**17.** Process according to any of Claims 9 to 16, **characterized in that** after the drying process, a roller compactor is used for pelletizing.

**18.** Precipitated silicas according to any of Claims 1 to 8, or prepared according to any of Claims 9 to 17, **characterized in that** their surfaces have been modified with organosilanes of the formulae I to III

$$Si[R^1_n(RO)_r(Alk)_m(Ar)_p]_q[B] \qquad (I),$$

$$SiR^1_n(RO)_{3-n}(Alkyl) \qquad (II),$$

or

$$SiR^1_n\,(RO)_{3-n}\,(Alkenyl) \qquad (III),$$

where

B is -SCN, -SH, -Cl, $-NH_2$, $-OC(O)CHCH_2$, $-OC(O)C(CH_3)CH_2$ (if q = 1), or $-S_w-$ (if q = 2), B being chemically bonded to Alk,
R and $R^1$ are an aliphatic, olefinic, aromatic, or arylaromatic radical having 2-30 carbon atoms, optionally with substitution by the following groups: the hydroxyl, amino, alcoholate, cyanide, thiocyanide, halo, sulfonic acid, sulfonic ester, thiol, benzoic acid, benzoic ester, carboxylic acid, carboxylic ester, acrylate, methacrylate, or organosilane radical, where the meaning or substitution of R and $R^1$ may be identical or different,
n is 0, 1, or 2,
Alk is a bivalent unbranched or branched hydrocarbon radical having from 1 to 6 carbon atoms,
m is 0 or 1,
Ar is an aryl radical having from 6 to 12 carbon atoms, preferably 6 carbon atoms, which may have substitution by the following groups: the hydroxyl, amino, alcoholate, cyanide, thiocyanide, halo, sulfonic acid, sulfonic ester, thiol, benzoic acid, benzoic ester, carboxylic acid, carboxylic ester, acrylate, methacrylate or organosilane radical,
p is 0 or 1, with the proviso that p and n are not simultaneously 0,
q is 1 or 2,
w is a number from 2 to 8,
r is 1, 2, or 3, with the proviso that r + n + m + p = 4,
Alkyl is a monovalent unbranched or branched saturated hydrocarbon radical having from 1 to 20 carbon atoms, preferably from 2 to 8 carbon atoms,
Alkenyl is a monovalent unbranched or branched unsaturated hydrocarbon radical having from 2 to 20 carbon atoms, preferably from 2 to 8 carbon atoms.

**19.** Precipitated silicas according to any of Claims 1 to 8 or as prepared in any of Claims 9 to 17,
**characterized in that**
their surfaces have been modified with organosilicon compounds whose composition is
$SiR^2_{4-n}X_n$ (where n = 1, 2, 3, 4),
$[SiR^2_xX_yO]_z$ (where $0 \le x \le 2$; $0 \le y \le 2$; $3 \le z \le 10$, where x + y = 2),
$[SiR^2_xX_yN]_z$ (where $0 \le x \le 2$; $0 \le y \le 2$; $3 \le z \le 10$, where x + y = 2),
$SiR^2_nX_mOSiR^2_oX_p$ (where $0 \le n \le 3$; $0 \le m \le 3$; $0 \le 0 \le 3$; $0 \le p \le 3$, where n + m = 3, o + p = 3) ,
$SiR^2_nX_mNSiR^2_c$ (where $0 \le n \le 3$; $0 \le m \le 3$; $0 \le 0 \le 3$; $0 \le p \le 3$, where n + m = 3, o + p = 3),
and/or
$SiR^2_nX_m[SiR^2_xX_yO]_zSiR^2_oX_p$ (where $0 \le n \le 3$; $0 \le m \le 3$; $0 \le x \le 2$; $0 \le y \le 2$; $0 \le o \le 3$; $0 \le p \le 3$; $1 \le z \le 10000$, where n + m = 3, x + y = 2, o + p = 3)
where
$R^2$ is alkyl and/or aryl radicals, substituted and/or unsubstituted, having from 1 to 20 carbon atoms, and/or is alkoxy, and/or alkenyl, and/or alkynyl groups, and/or is sulfur-containing groups,
X is a silanol, amino, thiol, halogen, alkoxy, alkenyl and/or hydrogen radical.

**20.** Process for preparing the silicas according to Claim 18 or 19,
**characterized in that**
the precipitated silicas are modified with organosilanes in mixtures of from 0.5 to 50 parts, based on 100 parts of precipitated silica, in particular from 1 to 15 parts, based on 100 parts of precipitated silica, where the reaction between precipitated silica and organosilane is carried out during the preparation of the mixture (in situ) or externally via spray application and subsequent heat-conditioning of the mixture, via mixing of the organosilane and the silica suspension with subsequent drying and heat-conditioning.

**21.** Use of silicas according to any of Claims 1 to 20 in elastomer mixtures, in vulcanizable rubber mixtures, and/or in other volcanizates, such as pneumatic tires, tire treads, cable sheathing, hoses, drive belts, conveyor belts, V-belts, roller coverings, tires, shoe soles, gaskets, and damping elements.

**22.** Use of silicas according to any of Claims 1 to 20 in battery separators, as antiblocking agent, as matting agent in inks and paints, as carrier for agricultural products and for feeds, in coatings, in printing inks, in fire-extinguisher powders, in plastics, in the non-impact printing sector, in paper pulp, or in the personal care sector.

**23.** Vulcanizable rubber mixtures and vulcanizates comprising, as filler, the precipitated silica according to Claim 1, with the following physical and chemical properties:

| | |
|---|---|
| CTAB surface area | 100-200 $m^2/g$ |
| BET/CTAB ratio | 0.8-1.05 |
| DBP value | 210-280 g/(100 g) |
| Sears value $V_2$ | 10-30 ml/(5 g) |
| Ratio of Sears value $V_2$ to BET surface area | 0.150 to 0.370 ml/(5m$^2$) |
| Moisture level | 4-8%. |

## Revendications

**1.** Acide silicique de précipitation **caractérisé par** les paramètres physico-chimiques suivants :

| | |
|---|---|
| Surface CTAB | 100 à 200 $m^2$/g |
| Rapport BET/CTAB | 0,8 à 1,05 |
| Indice DBP | 210 à 280 g/(100 g) |
| Indice Sears $V_2$ | 10 à 30 ml/(5 g) |
| Humidité | 4 à 8 % |
| Rapport de l'indice Sears $V_2$ sur la surface BET | 0, 150 à 0, 370 ml/ (5 $m^2$) |

**2.** Acide silicique de précipitation selon la revendication 1, **caractérisé en ce que** le rapport BET/CTAB est de 0,9 à 1,03.

**3.** Acide silicique de précipitation selon la revendication 1 ou 2, **caractérisé en ce que** l'indice Sears $V_2$ est de 20 à 30 ml/(5 g).

**4.** Acide silicique de précipitation selon l'une quelconque des revendications 1 à 3, **caractérisé en ce que** la surface CTAB est de 100 à 160 $m^2$/g.

**5.** Acide silicique de précipitation selon l'une quelconque des revendications 1 à 4, **caractérisé en ce que** l'indice DBP est de 250 à 280 g/(100 g).

**6.** Acide silicique de précipitation selon l'une quelconque des revendications 1 à 5, **caractérisé en ce que** la surface BET est de 80 à 110 $m^2$/g.

**7.** Acide silicique de précipitation selon l'une quelconque des revendications 1 à 5, **caractérisé en ce que** la surface BET est de 110 à 150 $m^2$/g.

**8.** Acide silicique de précipitation selon l'une quelconque des revendications 1 à 7, **caractérisé en ce que** le rapport de l'indice Sears $V_2$ sur la surface BET est de 0,170 à 0,370 ml/(5 $m^2$).

**9.** Procédé de préparation d'acides siliciques de précipitation selon les revendications 1 à 8, **caractérisé par** les étapes consistant successivement à :

(a) charger une solution aqueuse d'un silicate alcalin ou alcalino-terreux et/ou d'une base organique et/ou minérale ayant une valeur de pH de 7 à 14,
(b) doser simultanément du verre soluble et un agent d'acidification dans ce chargement, en agitant entre 55 et 95 °C pendant 10 à 120 minutes,
(g) agiter encore la suspension obtenue pendant 1 à 120 minutes entre 80 et 98 °C,
(h) acidifier à une valeur de pH de 2,5 à 5 avec un agent d'acidification et
(i) filtrer et sécher.

**10.** Procédé selon la revendication 9, **caractérisé en ce que** les étapes consistant à :

c) stopper l'ajout dosé pendant 30 à 90 minutes en maintenant la température et
d) ajouter ensuite de manière dosée, éventuellement simultanément, du verre soluble et un agent d'acidification à la même température et en agitant pendant 20 à 120, de manière préférée 20 à 80 minutes

sont mises une à deux fois en oeuvre de manière supplémentaire après l'étape b).

**11.** Procédé selon les revendications 9 et 10, **caractérisé en ce que** la valeur de pH dans l'étape e) est ajustée entre 3 et 11 après b) ou d) grâce à l'ajout d'un agent d'acidification.

**12.** Procédé selon la revendication 11, **caractérisé en ce que** la valeur de pH est ajustée entre 7 et 10 dans l'étape e) grâce à l'ajout d'acide après l'étape b) ou d).

**13.** Procédé selon l'une quelconque des revendications 11 à 12, **caractérisé en ce que** la valeur de pH est augmentée jusqu'à 8 à 14 dans une étape supplémentaire f) grâce à l'ajout d'un composé basique.

**14.** Procédé selon la revendication 13, **caractérisé en ce qu'**un silicate alcalin et/ou alcalino-terreux et/ou un hydroxyde alcalin et/ou alcalino-terreux est utilisé en tant que base.

**15.** Procédé selon l'une quelconque des revendications 9 à 14, **caractérisé en ce qu'**un ajout d'un sel organique ou minéral a lieu pendant une des étapes a) à h).

**16.** Procédé selon l'une quelconque des revendications 9 à 15, **caractérisé en ce qu'**un séchoir électrique, un séchoir par pulvérisation, un séchoir à étages, un séchoir à bande, un séchoir tubulaire rotatif, un séchoir instantané, un séchoir rotatif instantané ou un séchoir à tuyères est utilisé pour le séchage.

**17.** Procédé selon les revendications 9 à 16, **caractérisé en ce qu'**une granulation avec un compacteur à rouleau est mise en oeuvre après le séchage.

**18.** Acides siliciques de précipitation selon l'une quelconque des revendications 1 à 8, ou préparés selon l'une quelconque des revendications 9 à 17,
**caractérisés en ce que**
leurs surfaces sont modifiées avec des organosilanes de formule I à ICI :

$$[SiR^1_n(RO)_r(Alc)_m(Ar)_p]_q[B] \qquad (I),$$

$$SiR^1_n(RO)_{3-n}\ (Alkyle) \qquad (II),$$

ou

$$SiR^1_n(RO)_{3-n}(Alcényle) \qquad (III),$$

dans lesquelles :

B : signifie -SCN, -SH, -Cl, $-NH_2$, $-OC(O)CHCH_2$, $-OC(O)C(CH_3)CH_2$ (quand q = 1) ou $-S_w-$ (quand q = 2), B étant lié chimiquement à Alc,
R et $R^1$ : radical aliphatique, oléfinique, aromatique ou arylaromatique ayant 2 à 30 atomes de C, qui peut être substitué de manière optionnelle par les groupes suivants : radical hydroxy, amino, alcoolate, cyanure, thiocyanure, halogène, acide sulfonique, ester d'acide sulfonique, thiol, acide benzoïque, ester d'acide benzoïque, acide carboxylique, ester d'acide carboxylique, acrylate, méthacrylate, organosilane, R et $R^1$ pouvant avoir une signification ou une substitution identique ou différente,
n : 0, 1 ou 2,
Alc : un radical hydrocarbure bivalent linéaire ou ramifié ayant 1 à 6 atomes de carbone,
m : 0 ou 1,
Air : un radical aryle ayant 6 à 12 atomes de C, de manière préférée 6 atomes de C, qui peut être substitué par les groupes suivants : radical hydroxy, amino, alcoolate, cyanure, thiocyanure, halogène, acide sulfonique, ester d'acide sulfonique, thiol, acide benzoïque, ester d'acide benzoïque, acide carboxylique, ester d'acide carboxylique, acrylate, méthacrylate, organosilane,
p : 0 ou 1, sous réserve que p et n ne signifient pas simultanément 0,
q : 1 ou 2,
w : un nombre de 2 à 8,
r : 1, 2 ou 3, sous réserve que r + n + m + p = 4,
alkyle : un radical hydrocarbure monovalent linéaire ou ramifié saturé ayant 1 à 20 atomes de carbone, de manière préférée 2 à 8 atomes de carbone,
alcényle : un radical hydrocarbure monovalent linéaire ou ramifié insaturé ayant 2 à 20 atomes de carbone, de manière préférée 2 à 8 atomes de carbone.

**19.** Acides siliciques de précipitation selon l'une quelconque des revendications 1 à 8 ou préparés selon l'une quelconque des revendications 9 à 17, **caractérisés en ce que** leurs surfaces sont modifiées par des composés organosiliciés de composition :

$SiR^2_{4-n}X_n$ (avec n = 1, 2, 3, 4),
$[SiR^2_xX_yO]_z$ (avec $0 \leq x \leq 2$ ; $0 \leq y \leq 2$ ; $3 \leq z \leq 10$, avec x + y = 2),
$[SiR^2_xX_yN]_z$ (avec $0 \leq x \leq 2$ ; $0 \leq y \leq 2$ ; $3 \leq z \leq 10$, avec x + y = 2),

$SiR^2_nX_nOSiR^2_oX_p$ (avec $0 \leq n \leq 3$ ; $0 \leq m \leq 3$ ; $0 \leq 0 \leq 3$ ; $0 \leq p \leq 3$, avec $n + m = 3$, $o + p = 3$),
$SiR^2_nX_mNSiR^2_c$ (avec $0 \leq n \leq 3$ ; $0 \leq m \leq 3$ ; $0 \leq 0 \leq 3$ ; $0 \leq p \leq 3$, avec $n + m = 3$, $o + p = 3$),
et/ou
$SiR^2_nX_m[SiR^2_zX_yO]_zSiR^2_oX_p$ (avec $0 \leq n \leq 3$ ; $0 \leq m \leq 3$ ; $0 \leq x \leq 2$ ; $0 \leq y \leq 2$ ; $0 \leq o \leq 3$ ; $0 \leq p \leq 3$ ; $1 \leq z \leq 10000$ avec $n + m = 3$, $x + y = 2$, $o + p = 3$),

où

$R^2$ : signifie radicaux alkyle et/ou aryle substitués et/ou non substitués ayant 1 à 20 atomes de carbone et/ou groupes alcoxy et/ou alcényle et/ou alcinyle et/ou groupes contenant du soufre,
X : radical silanol, amino, thiol, halogène, alcoxy, alcényle et/ou hydrogène.

**20.** Procédé de préparation des acides siliciques selon la revendication 18 ou 19, **caractérisé en ce que** les acides siliciques de précipitation sont modifiés avec des organosilanes dans des mélanges de 0,5 à 50 parts, par rapport à 100 parts d'acide silicique de précipitation, en particulier 1 à 15 parts, par rapport à 100 parts d'acide silicique de précipitation, la réaction entre l'acide silicique de précipitation et l'organosilane étant mise en oeuvre pendant la préparation de mélange (sur site) ou en dehors par pulvérisation et mise en température consécutive du mélange, par mélange de l'organosilane et de la suspension d'acide silicique avec séchage consécutif et mise en température.

**21.** Utilisation d'acides siliciques selon l'une quelconque des revendications 1 à 20 dans des mélanges d'élastomère, des mélanges de caoutchouc pouvant être vulcanisés et/ou d'autres produits vulcanisés, comme des chambres à air, des chapes de pneumatique, des enveloppes de câble, des tuyaux, des courroies d'entraînement, des bandes convoyeuses, des courroies trapézoïdales, des revêtements de rouleaux, des pneumatiques, des semelles de chaussures, des joints d'étanchéité et des éléments d'amortissement.

**22.** Utilisation d'acides siliciques selon l'une quelconque des revendications 1 à 20 dans des séparateurs de batterie, en tant qu'agent anti-adhérent, en tant qu'agent de matage dans des colorants et des peintures, en tant que support de produits agricoles et de produits alimentaires, dans des revêtements, dans des encres d'impression, dans des poudres d'extincteur, dans des matières plastiques, dans le secteur de l'impression sans impact, dans des pâtes à papier, dans le domaine des soins personnels.

**23.** Mélanges de caoutchouc pouvant être vulcanisés et produits vulcanisés, qui contiennent en tant que matière de charge l'acide silicique de précipitation selon la revendication 1 ayant les paramètres physico-chimiques suivants :

| | |
|---|---|
| Surface CTAB | 100 à 200 $m^2$/g |
| Rapport BET/CTAB | 0,8 à 1,05 |
| Indice DBP | 210 à 280 g/(100 g) |
| Indice Sears $V_2$ | 10 à 30 ml/(5 g) |
| Humidité | 4 à 8 % |
| Rapport de l'indice Sears $V_2$ sur la surface BET | 0, 150 à 0, 370 ml/ (5 $m^2$) |

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0501227 A
- JP 2002179844 B
- EP 0937755 A
- DE 10124298
- DE 10112441 A1
- EP 0755899 A2
- US 4001379 A
- EP 0901986 A1
- EP 0983966 A
- DE 3437473
- DE 19609619
- DE S4004781
- WO 9909036 A
- EP 1108231 A
- DE 10137809
- DE 10163945
- DE 10223658


### In der Beschreibung aufgeführte Nicht-Patentliteratur


- **R. H. LANGE ; J. BLOEDOM.** Das Elektronenmikroskop, TEM + REM. Thieme Verlag, 1981
- **S. BRUNAUER ; P. H. EMMETT ; E. TELLER.** Adsorption of Gases in Multimolecular Layers. *J. Am. Chem. Soc.,* 1938, vol. 60, 309
- **JANZEN ; KRAUS.** *Rubber Chem. Technol.,* 1971, vol. 44, 1287
- **S. WOLFF.** Chemical Aspects of Rubber Reinforcement by Fillers. *Rubber Chem. Technol.,* 1996, vol. 69, 325
- **U. GÖRL ; R. PANENKA.** Silanisierte Kieselsäuren - Eine neue Produktklasse für zeitgemäße Mischungsentwicklung. *Kautsch. Gummi Kunstst.,* 1993, vol. 46, 538
- **H.-D. LUGINSLAND.** Processing of Silica/Silane-Filled Tread Compounds. *ACS Meeting,* 04. April 2000
- **J. BEHR ; G. SCHRAMM.** Über die Bestimmung der Ölzahl von Kautschukfüllstoffen mit dem Brabender-Plastographen. *Gummi Asbest Kunstst.,* 1966, vol. 19, 912
- **U. GÖRL ; A. HUNSCHE ; A. MÜLLER ; H. G. KOBAN.** Investigations into the Silica/Silane Reaction System. *Rubber Chem. Technol.,* 1997, vol. 70, 608
- **W. HOFMANN.** Kautschuktechnologie. GenterVerlag, 1980
- **DR. W. NIEDERMEIER.** Blend mit einem typischen Laufflächenruß auch zur Verbesserung des Cut & Chip Verhaltes von Bau-, Landmaschinen- und Grubenreifen. *New insights into the tear mechanism,* 2003
- **A. WEHMEIER.** Filler Dispersion Analysis by Topography Measurements. *Technical Report TR 820, Degussa AG, Advanced Fillers and Pigments Division*
- **H. GEISLER.** Bestimmung der Mischgüte. DIK-Workshop, 27. November 1997